# EUROPÄISCHE PATENTSCHRIFT

(11) **EP 4 500 322 B1**
(45) Veröffentlichungstag und Bekanntmachung des Hinweises auf die Patenterteilung: **23.09.2026**
(21) Anmeldenummer: 23713652.8
(22) Anmeldetag: 23.03.2023
(51) Int. Cl.: G06F 8/65, G05B 19/418

(54) **VERWALTUNGS- UND AKTUALISIERUNGSSYSTEM FÜR AN EIN OT-NETZWERK ANGESCHLOSSENE AUTOMATISIERUNGSGERÄTE EINER AUTOMATISIERUNGSANLAGE**
MANAGEMENT AND UPDATING SYSTEM FOR AUTOMATION DEVICES OF AN AUTOMATION SYSTEM CONNECTED TO AN OT NETWORK
SYSTÈME DE GESTION ET DE MISE À JOUR POUR DES DISPOSITIFS D'AUTOMATISATION D'UN SYSTÈME D'AUTOMATISATION CONNECTÉ À UN RÉSEAU OT

(30) Priorität: 24.03.2022 LU 501705
(43) Veröffentlichungstag der Anmeldung: 05.02.2025
(73) Patentinhaber: PHOENIX CONTACT GMBH & CO. KG, 32825 Blomberg (DE)
(72) Erfinder: FAST, Arno Martin, 32791 Lage (DE); WALDECK, Boris, 32120 Hiddenhausen (DE); WEGENER, Friedrich, 37647 Vahlbruch (DE)
(74) Vertreter: Blumbach · Zinngrebe Patentanwälte PartG mbB
(86) Internationale Anmeldenummer: PCT/EP2023/057462
(87) Internationale Veröffentlichungsnummer: WO 2023/180442

(56) Entgegenhaltungen:
- EP-A1- 2 189 900
- WO-A1-2016/092006

## Beschreibung

Die Erfindung betrifft ein System für die Verwaltung und Aktualisierung für an ein OT-Netzwerk angeschlossene Automatisierungsgeräte einer Automatisierungsanlage.

Herkömmlicherweise ist eine Aktualisierung für an ein OT-Netzwerk angeschlossene Automatisierungsgeräte einer Automatisierungsanlage, nachfolgend auch als industrielle Automatisierungsgeräte bezeichnet, insbesondere von auf diesen Geräten befindlicher Firmware, nur lokal und einzeln pro Gerät möglich. Für viele Geräte sind daher unterschiedliche Tools im Einsatz. Neue Entwicklungen für einzelne Geräte sind geplant oder schon gestartet. Bisher sind jedoch nach hiesiger Kenntnis keine oder nur gerätespezifischen Standards im Einsatz.

So gibt es zur Verwaltung industrieller Automatisierungsgeräte sogenannte "Devicemanagement Tools", wie z.B. das von der Fa. Etherwan unter der Bezeichnung "eVue" auf dem Markt befindliche Werkzeug zur gerätespezifischen Netzwerkkonfiguration und -überwachung, die von der Fa. Perle unter der Bezeichnung "PerleView" auf dem Markt befindliche Software für deren Netzwerk Komponenten, oder das "Mobile Device Management" der Fa. Phoenix Contact Cyber Security GmbH um deren "MGuard"-Geräte zur Fernwartung und Überwachung über Mobilfunknetze up-zu-daten.

Ausgehend von solchen "Devicemanagement Tools" bestehen jedoch weitere Anforderungen insbesondere hinsichtlich eines umfassenden und modularen Devicemanagement Systems bei gleichzeitiger Gewährleistung durchgängiger Sicherheit (im engl. "Security").

Anforderungen betreffend das Schließen von Sicherheitslücken oder das Erweitern von Funktionen ist bei Computern, der IT-Infrastruktur oder auch bei mobilen Endgeräten somit seit langem bekannt. Für Automatisierungsgeräte wie einer SPS (Speicher programmierbare Steuerung) oder auch Netzwerkkomponenten in einer Anlage, sind diese Anforderungen noch nicht so lange ein Thema und je näher sich IT und OT kommen, d.h. die die elektronische Datenverarbeitung beschreibende/betreffende "Information Technology" (IT) und die "Operational Technology" (OT), welche die Hard- und Software-Infrastruktur zur direkten Überwachung und/oder Kontrolle von Industrieanlagen, Geräte, Prozessen und Ereignissen betrifft, desto mehr wird ein Device- und Updatemanagement, d.h. ein Geräte- und Aktualisierungsmanagement, für den Automatisierungsmarkt benötigt. Zur Abgrenzung zwischen IT und OT dient hierbei im Rahmen der Erfindung das international genormte ISA95-Modell, welches die Automatisierung in fünf Ebenen gliedert. Die obersten beiden Ebenen umfassen die übergeordnete Unternehmensebene und Betriebsleitebene. Die digitalen Abläufe in diesen Ebenen werden der IT zugeordnet und finden in hierfür entsprechend eingerichteten IT-Netzwerken statt. Die Steuerung der Automatisierungsprozesse auf den unteren drei Ebenen, d.h. der Prozessleitebene, der Steuerungsebene und der Feldebene erfolgt hingegen über entsprechend eingerichtete OT-Netzwerke. Für eine Verbindung einschl. eines Datenaustausches zwischen beiden Netzwerken bedarf es somit grundsätzlich eines Bindeglieds.

Die DE 10 2006 010 539 A1 z.B. beschreibt eine regelmäßige Aktualisierung eines Benutzungsprofils einer programmgesteuerten Einrichtung und in Abhängigkeit hiervon dann die Aktualisierung eines Programms dieser Einrichtung.

Die EP 3 764 221 A1 z.B. beschreibt eine Aktualisierung einer Softwareversion einer Applikation auf einem Automatisierungsgerät, wobei eine aktualisierte Version zunächst in einem abgesicherten Bereich einer Datenverarbeitungseinrichtung mit historischen Prozessdaten zum Erzeugen von Prüfkorrekturdaten ausgeführt wird und die Prüfkorrekturdaten mit von der Applikation des Automatisierungsgerätes aus den historischen Prozessdaten erzeugten Korrekturdaten verglichen werden, bevor und ein Austausch mit der aktualisierten Version der Applikation erfolgt.

Die DE 10 2015 112 040 A1 z.B. beschreibt eine Firmware-Aktualisierung einer Steuereinrichtung zur Prozesssteuerung, wobei herstellerseitig eine geräteindividuelle Berechtigungsprüfung durchgeführt und hierauf basierend ein geräteindividueller Freischaltcode zur Durchführung der Firmware-Aktualisierung mittels einer nutzerseitig mit der Steuereinrichtung verbindbaren Aktualisierungs-Einrichtung vorgesehen ist.

Die EP 3 001 310 A1 z.B. beschreibt eine Aktualisierung von Firmware für Komponenten einer industriellen Automatisierungsanordnung, wobei anhand von gespeicherten Kompatibilitätsbeziehungen zwischen verschiedenen, verfügbaren Firmwareversionen für die Komponenten und gespeicherten Informationen über die in den Komponenten aktuell verwendeten Firmwareversionen die zu aktualisierenden Komponenten und die dabei jeweils verwendbaren Firmwareversionen zur Aktualisierung ermittelt werden.

Die EP 3 588 277 A1 z.B. beschreibt eine Firmware-Aktualisierung, bei welcher für einen Gerätekomplex mit wenigstens einem hierarchisch höher und wenigstens einem hierarchisch niedriger gestellten Gerät ein Firmwarepaket zusammengestellt und in einer Top-down- Reihenfolge, ausgehend mit einer Übertragung zum hierarchisch höher gestellten Gerät, verteilt und angewendet wird. Wesentlich ist, dass das für den Gerätekomplex zusammengestellte Firmwarepaket an ein einziges Gerät innerhalb des Komplexes übertragen wird, welches dann die weitere Verteilung koordiniert.

Die EP 3 696 699 A1 z.B. beschreibt eine Firmware-Aktualisierung in einem elektronischen Gerät, bei welcher nach Erhalt einer Aktualisierungsdatei, die eine neue Firmware, eine Signatur und ein Zertifikat mit einer Verifikationsinformation aufweist, zunächst diese Verifikationsinformation mit einer aus dem elektronischen Gerät ausgelesenen Verifikationsinformation verglichen, und erst in Abhängigkeit des Vergleichs dann gegebenenfalls die Signatur überprüft und schließlich in Abhängigkeit hiervon die tatsächliche Aktualisierung durchgeführt wird.

Die WO 2016/092003 A1 (EP3230856) z.B. beschreibt eine Firmware-Aktualisierung von Geräten, bei welcher eine Firmware-Datei von einem Lade-Tool in das Gerät unter Berücksichtigung von firmwarespezifischer und/ oder gerätespezifischer Lade-Informationen übertragen wird. Um hierbei das Firmware-Update unterschiedlicher Geräte mit nur einem Lade-Tool zu ermöglichen, ist vorgesehen, dass die Lade-Informationen ausgegliedert aus dem Lade-Tool auf zumindest einer externen Datenquelle gespeichert und durch das Lade-Tool geladen werden.

Die US 2018/0357058 A1 z.B. beschreibt eine Firmware-Aktualisierung, bei welcher auf einer Konfigurationsvorlage basierend von einem Produktkompatibilitäts- und Download-Center verfügbare Firmware-Updates bestimmt werden und in Abhängigkeit hiervon erforderliche Firmware-Update-Dateien und ein Firmware-Update-Zeitplan automatisch bestimmt werden, wobei die Übertragung der erforderlichen Firmware-Update-Dateien an die industriellen Komponenten in einer durch den Firmware-Update-Zeitplan festgelegten Reihenfolge erfolgt.

Die US 2018/0359144 A1 z.B. beschreibt in ähnlicher Weise zu letztgenanntem Dokument eine Firmware-Aktualisierung, bei welcher jedoch ein Menü zur Aktualisierung von Firmware von einem Aktualisierungsserver für einen Benutzer über eine Webschnittstelle innerhalb einer Anwendung, die auf einem Benutzergerät läuft, bereitgestellt und eine hierüber getätigte Auswahl durch den Benutzer über die Webschnittstelle empfangen wird, wobei hierauf basierend erforderliche Firmware-Update-Dateien und ein Firmware-Update-Zeitplan bestimmt sowie die erforderlichen Firmware-Update-Dateien an die industriellen Komponenten in einer durch den Firmware-Update-Zeitplan festgelegten Reihenfolge übertragen werden.

Die EP 2 189 900 A1 z.B. beschreibt eine Software-Aktualisierung, bei welcher eine für eine Konfiguration von Knoten eines Prozesssteuerungssystems anwendbare Aktualisierung identifiziert wird, Aktualisierungssoftware sowie zugehörige Metadaten betreffend die Anwendbarkeit der Software auf einen Knoten bereitgestellt werden und auf der Grundlage der Metadaten von einer Arbeitsstation aus, die mit dem Knoten des Prozessleitsystems kommuniziert, die Installation der Software zur Aktualisierung erfolgt.

Die DE 102 40 584 A1 z.B. beschreibt ein Aufspielen eines neuen Betriebsprogrammes für eine Sicherheitssteuerung, bei welchem in der Sicherheitssteuerung eine Downloadeinrichtung zum Übernehmen eines neuen Betriebsprogramms vorhanden ist, die die Übernahme des neuen Betriebsprogramms in Abhängigkeit von einer Freigabeinformation fehlersicher freigibt oder unterbindet.

Die EP 3 923 095 A1 z.B. beschreibt eine Softwareaktualisierung einer technischen Anlage, bei welcher Konfigurationsparameter umfassende Betriebsparameter eines Produktionsprozesses einer technischen Anlage erfasst und Softwareaktualisierungen für ein Element der technischen Anlage geladen werden, wobei anhand der Betriebsparameter und der Softwareaktualisierungen eine Aktualisierungskonfiguration für die Softwareaktualisierung des Elements ermittelt werden und die Aktualisierungskonfiguration und/oder die Softwareaktualisierung einem Aktualisierungsserver übermittelt wird, wobei der Aktualisierungsserver die Softwareaktualisierung des Elements der technischen Anlage anhand der Aktualisierungskonfiguration steuert und/oder überwacht und/oder aufzeichnet.

Die WO 2016/092006 beschreibt die Aktualisierung von Firmware in Automatisierungsgeräten in einem Netzwerk, wobei ein Firmware-Verwaltungstool eine modulare Schnittstelle nutzt, die automatisch auf der Grundlage von Konfigurationsdaten konfiguriert wird, die von automatisch erkannten Automatisierungsgeräten abgerufen werden, wobei Firmware-Updates, die beschreibende Metadaten enthalten, die automatisch von einem zentralen Update-Server abgerufen werden, wobei ein passendes Firmware-Update auf der Grundlage der Gerätekonfiguration und der Metadaten ausgewählt wird.

Vor dem Hintergrund des vorstehend aufgezeigten Standes der Technik ist es Aufgabe der Erfindung, einen neuen Weg, insbesondere auch für eine herstellerunabhängige Verwaltung und Aktualisierung von industriellen Automatisierungsgeräten einer Automatisierungsanlage, wie z.B. von Speicher programmierbaren Steuerungen, IO-Modulen (Eingangs-/Ausgangs-Module), Frequenzumrichtern, Robotern, Netzwerkgeräten, Spannungsversorgungen oder weiteren in der Automatisierungstechnik eingesetzten Komponenten, aufzuzeigen, wobei zweckmäßig nicht nur die Möglichkeit der Komponenten übergreifenden Aktualisierung, sondern auch eine in allen Ebenen eines Automatisierungssystems durchgängige Sicherheit (Security) bereitgestellt werden soll.

Die Lösung gemäß der Erfindung ist durch ein System mit den Merkmalen des Anspruchs 1 sowie einen Datenträger gemäß Anspruch 10 gegeben. Zweckmäßige Ausgestaltungen der Erfindung sind Gegenstand der abhängigen Ansprüche.

Demgemäß schlägt die Erfindung ein Verwaltungs- und Aktualisierungssystem für an ein OT-Netzwerk angeschlossene Automatisierungsgeräte einer Automatisierungsanlage vor, wobei das Verwaltungs- und Aktualisierungssystem eine Geräteverwaltungs- und Aktualisierungs-Benutzereinrichtung umfasst, die an ein OT-Netzwerk angeschlossen ist, an welches ferner eine Mehrzahl von Automatisierungsgeräten einer Automatisierungsanlage angeschlossen ist. Die Geräteverwaltungs- und Aktualisierungs-Benutzereinrichtung ist hierbei ferner programmtechnisch eingerichtet ist zum Bereitstellen:
- eines Schnittstellenauswahl- und -verbindungsdienstes, eingerichtet zum Auswählen und Einrichten einer Kommunikationsschnittstelle zum Herstellen einer Kommunikationsverbindung zu einem Automatisierungsgerät der Mehrzahl von angeschlossenen Automatisierungsgeräten,
- eines Auslesedienstes, eingerichtet zum Aktivieren eines Auslesens aus jedem Automatisierungsgerät, zu dem die Kommunikationsverbindung hergestellt ist, von in dem Automatisierungsgerät hinterlegter Geräte-Typ-Information, und zum Speichern der jeweils ausgelesenen Geräte-Typ-Information,
- eines Aktualisierungsplanungsdienstes, eingerichtet zum Planen von Aktualisierungsanforderungen für jedes Automatisierungsgerät der Mehrzahl von Automatisierungsgeräten, zu dem ausgelesene Geräte-Typ-Information gespeichert ist,
- eines Aktualisierungsdateien-Abrufdienstes, eingerichtet zum Einrichten einer Kommunikationsverbindung zu wenigstens einer Speichereinrichtung und Abrufen von in der Speichereinrichtung hinterlegten Aktualisierungsdateien,
- eines Prüf- und Zuweisungsdienstes, eingerichtet zum Prüfen jeder abgerufenen Aktualisierungsdatei auf deren Freigabe in Bezug auf die Mehrzahl von Automatisierungsgeräte in funktionaler Abhängigkeit der gespeicherten Geräte-Typ-Information und sofern die Prüfung einer der abgerufenen Aktualisierungsdateien zu einer Freigabe für ein Automatisierungsgerät führt, zum Zuweisen dieser Aktualisierungsdatei zu den zu diesem Automatisierungsgerät gespeicherten Geräte-Typ-Information,
- eines Aktualisierungsdienstes, eingerichtet zum Übertragen gemäß gespeicherter Geräte-Typ-Information an jedes Automatisierungsgerät der diesem Automatisierungsgerät jeweils zugewiesenen Aktualisierungsdatei einschließlich eines Aktualisierungsbefehls, und zwar jeweils in funktionaler Abhängigkeit der für jedes Automatisierungsgerät geplanten Aktualisierungsanforderungen.

Wesentliche Vorteile der Erfindung gegenüber dem voraufgezeigten Stand der Technik können folglich darin gesehen werden, dass mit der erfindungsgemäß eingerichteten Geräteverwaltungs- und Aktualisierungs-Benutzereinrichtung, die zusätzlich zu der Mehrzahl von Automatisierungsgeräten einer Automatisierungsanlage an das selbe OT-Netzwerk angeschlossen ist, eine zentrale Geräteverwaltungs- und Aktualisierungs-Komponente, insbesondere unter Verwendung von Hardware und Softwarekomponenten, geschaffen ist, mit der Updates der einzelnen Automatisierungsgeräte mittels definierbaren Aktualisierungsplänen, vorzugsweise durch einen jeweiligen Anwender, zentral gesteuert werden können. So kann mittels dieser zentral geschaffenen Geräteverwaltungs- und Aktualisierungs-Komponente ferner auch gleichzeitig die Prüfung erfolgen, ob ein Update zu einem jeweiligen Automatisierungsgerät passt. Ferner ermöglicht die zentral geschaffene Geräteverwaltungs- und Aktualisierungs-Komponente somit das jeweilige Aktualisieren jeweils bezogen auf ein einzelnes Automatisierungsgerät, welches ein hohes Maß an Flexibilität bietet. Auch kann hierdurch, insbesondere mittels des Aktualisierungsplanungsdienstes in vorteilhafter Weise die Reihenfolge und die Version von Updates, wie z.B. zu aktualisierender Software, mit der Geräteverwaltungs- und Aktualisierungs-Benutzereinrichtung zentral aber individuell für jedes einzelne Automatisierungsgerät vorgegeben werden.

Darüber hinaus kann für die Durchführung einer Prüfung jeder abgerufenen Aktualisierungsdatei auf deren Freigabe bevorzugt zu jeder Aktualisierungsdatei, z.B. einer Firmware, eine Beschreibungsdatei zugeordnet werden. Folglich kann in zweckmäßiger Weise zusätzlich zu den aus den Automatisierungsgeräten ausgelesenen, gespeicherten Informationen auch die jeweilige Beschreibungsdatei in der zentral geschaffenen Geräteverwaltungs- und Aktualisierungs-Komponente bei der Prüfung, ob ein Update durchgeführt werden soll eingesetzt werden, sodass hierdurch auf höchstem Maße die Kompatibilität zwischen Automatisierungsgerät und dessen Update bzw. der Aktualisierungsdatei sichergestellt werden kann. Ist in zweckmäßiger Weise in den Aktualisierungsdateien jeweils eine Signatur enthalten, kann vorzugsweise mittels öffentlichen, in einem Speicher der zentral geschaffenen Geräteverwaltungs- und Aktualisierungs-Komponente hinterlegbaren bzw. bereits hinterlegten Schlüsseln auf Echtheit und folglich auch die Aktualisierungsdatei selbst auf Echtheit überprüft werden.

Die Erfindung sieht darüber hinaus die Bereitstellung eines Datenträgers mit einem darauf gespeicherten Programmcode vor, der derart ausgebildet ist, dass eine an ein OT-Netzwerk anschließbare Datenverarbeitungseinrichtung, wenn sie mit dem Programmcode programmiert ist, eine gemäß entsprechend eingerichtete Geräteverwaltungs- und Aktualisierungs-Benutzereinrichtung bereitstellt.

Vorstehend bereits umrissene sowie weitere Merkmale und Vorteile der Erfindung werden anhand der nachfolgend Beschreibung anhand von Beispielen bevorzugter Aus- und Weiterbildungen näher ersichtlich, wobei auf die beigefügten Zeichnungen Bezug genommen wird, in welchen zeigen:
- Fig. 1: eine Übersicht einer in ein beispielhaftes Verwaltungs- und Aktualisierungssystem für an ein OT-Netzwerk angeschlossene Automatisierungsgeräte einer Automatisierungsanlage eingebundenen Geräteverwaltungs- und Aktualisierungs-Benutzereinrichtung gemäß der Erfindung,
- Fig. 2: eine beispielhafte Bedienoberfläche für ein Geräte- und Aktualisierungsmanagement auf einer erfindungsgemäß eingerichteten Geräteverwaltungs- und Aktualisierungs-Benutzereinrichtung mit einer für die Übersicht von definierbaren bzw. bereits definierter Aktualisierungs-Lagerorte geöffneten Bedienmaske,
- Fig. 3: die beispielhafte Bedienoberfläche gemäß Fig. 2 mit einer für die Anzeige/Auswahl von eingelesenen Aktualisierungsdateien geöffneten Bedienmaske,
- Fig. 4: die beispielhafte Bedienoberfläche gemäß Fig. 2 mit einer für die Freigabe von Aktualisierungsdateien gemäß Fig. 3 geöffneten Bedienmaske,
- Fig. 5: eine beispielhafte Übersicht von mittels der Geräteverwaltungs- und Aktualisierungs-Benutzereinrichtung gemäß der Erfindung möglichen Kommunikationsverbindungen,
- Fig. 6: die beispielhafte Bedienoberfläche gemäß Fig. 2 mit einer zum Vorgeben von Kommunikationsschnittstellen und Kommunikationsverbindungen geöffneten Bedienmaske,
- Fig. 7: die beispielhafte Bedienoberfläche gemäß Fig. 2 mit einer zum Anzeigen und Organisieren von einem jeweiligen Automatisierungsgerät umfassten Assets geöffneten Bedienmaske,
- Fig. 8: die beispielhafte Bedienoberfläche gemäß Fig. 2 mit einer zum Erstellen eines Aktualisierungsplanes geöffneten Bedienmaske,
- Fig. 9: die beispielhafte Bedienoberfläche gemäß Fig. 2 mit einer nach Starten eines Aktualisierungsplanes geöffneten Bedienmaske,
- Fig. 10: die beispielhafte Bedienoberfläche gemäß Fig. 2 mit einer zur Protokollierung einer Aktualisierung geöffneten Bedienmaske,
- Fig. 11: eine Übersicht einer beispielhaften Gesamtarchitektur eines Verwaltungs- und Aktualisierungssystems gemäß der Erfindung, und
- Fig. 12: eine Übersicht einer beispielhaften überlagerten Verwaltungsplattform für eine Mehrzahl von Geräteverwaltungs- und Aktualisierungs-Benutzereinrichtungen im Rahmen eines Verwaltungs- und Aktualisierungssystems gemäß der Erfindung.

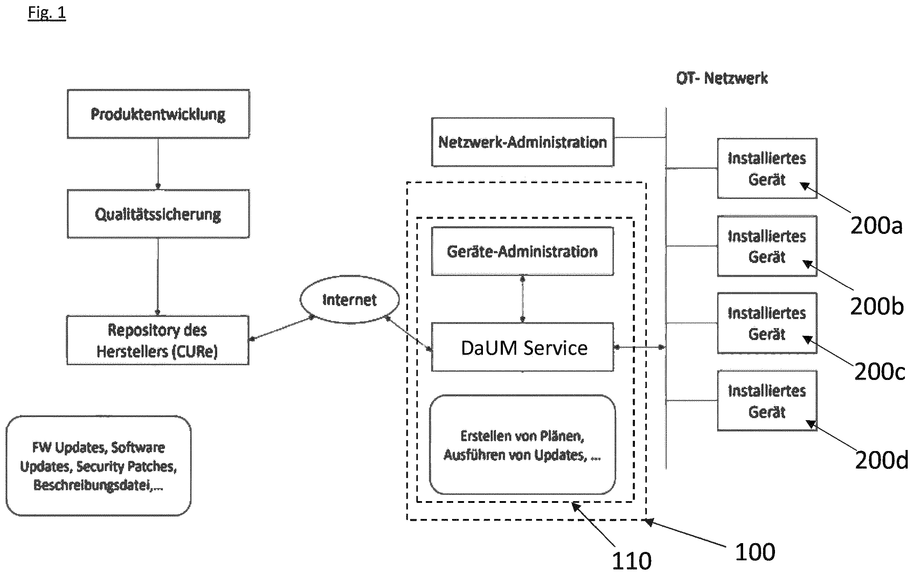

Nachfolgend wird auf die Fign. 1 bis 12 Bezug genommen, anhand welcher Beispiele von bevorzugten Aus- und Weiterbildungen eines erfindungsgemäßen Verwaltungs- und Aktualisierungssystems skizziert und aus Gründen der Übersichtlichkeit stark vereinfacht dargestellt sind.

Skizziert ist bei Fig. 1 eine beispielhafte Ausbildung der Erfindung für an ein OT-Netzwerk angeschlossene Automatisierungsgeräte 200a -200d einer Automatisierungsanlage.

Ein bei Fig. 1 aus Gründen der Übersichtlichkeit nicht im Einzelnen dargestelltes Verwaltungs- und Aktualisierungssystem 100, nachfolgend auch als DaUM-System ("Device and Update Management System") bezeichnet, umfasst bzw. integriert insbesondere eine Geräteverwaltungs- und Aktualisierungs-Benutzereinrichtung 110, die an ein OT-Netzwerk angeschlossen ist, an welches ferner die Mehrzahl von Automatisierungsgeräten 200a-200d der Automatisierungsanlage angeschlossen und also dort installiert ist. Wie nachfolgend noch im Einzelnen dargelegt, ist die Geräteverwaltungs- und Aktualisierungs-Benutzereinrichtung 110 ferner programmtechnisch eingerichtet zum Bereitstellen von verschiedenen Diensten. Diese Dienste des Verwaltungs- und Aktualisierungssystems sind bei Fig. 1 in ihrer Gesamtheit mit DaUM Service ("Device and Update Management Service") bezeichnet und gewährleisten hierbei im Rahmen der Verwaltung und Aktualisierung in ihrer Gesamtheit insbesondere eine dynamische Asset- und Funktionsüberwachung der an dem OT-Netzwerk installierten Automatisierungsgeräte.

Es wird darauf hingewiesen, dass im Rahmen der Erfindung unter Assets grundsätzlich zunächst jede Art von Hardware (z. B. Server und Switches) und Software (z. B. Firmware, Anwendungen, Konfigurationen und unterstützende Systeme) einer Automatisierungsumgebung zusammengefasst ist, die im Zusammenhang einer Automatisierungsanlage mit an ein OT-Netzwerk angeschlossenen Automatisierungsgeräten Aktivitäten unterstützt. Hierzu zählen im Allgemeinen auch vertrauliche Informationen, die vor unrechtmäßigem Zugriff oder unrechtmäßiger Verwendung, Offenlegung, Veränderung, Zerstörung und/oder Diebstahl zu schützen sind.

Unter der Annahme beispielsweise, dass für die bei Fig. 1 dargestellten, am OT-Netzwerk angeschlossenen und installierten Automatisierungsgeräten 200a-200d neue Dateien zur Aktualisierung erstellt und die Automatisierungsgeräte 200a-200d anschließend mit den Dateien aktualisiert werden sollen, werden typischerweise zunächst je nach Hersteller entsprechende Firmware und Softwaremodule als Dateien über die Produktentwicklung mit der zugehörigen Qualitätssicherung vom Hersteller zur Verfügung gestellt und in einer Speichereinrichtung abgelegt bzw. zwischengespeichert. Auch die Speichereinrichtung kann hierbei insbesondere eine Speichereinrichtung des Herstellers sein, kann jedoch im Rahmen der Erfindung grundsätzlich jede Art von Speichereinrichtung umfassen, wie z.B. einen USB-Stick oder auch einen über das Internet zugreifbaren Speicherraum. Insbesondere stellt die Speichereinrichtung somit im Wesentlichen einen in Bezug auf diese zur Verfügung gestellten und für eine Aktualisierung vorgesehen Dateien zentralen Aktualisierungsspeicher als Quelle dar, der bei Fig. 1 sowie nachfolgend auch als "Cure" ("Central Update Repository" bezeichnet ist.

Im Rahmen der Erfindung ist die Geräteverwaltungs- und Aktualisierungs-Benutzereinrichtung 110 folglich zunächst programmtechnisch eingerichtet zum Bereitstellen eines Aktualisierungsdateien-Abrufdienstes, d.h. insbesondere zum Einrichten einer Kommunikationsverbindung zu wenigstens einer Speichereinrichtung und zum Abrufen von in der Speichereinrichtung hinterlegten Aktualisierungsdateien.

Um eine Speichereinrichtung, die über das Internet erreichbar ist, z.B., wie bei Fig. 1 skizziert, beispielsweise in Art eines CURe Servers, zu nutzen, ist die Geräteverwaltungs- und Aktualisierungs-Benutzereinrichtung 110 folglich zweckmäßig derart programmtechnisch eingerichtet, dass eine definierte Schnittstelle über das Internet zum Cure einrichtbar ist und daraufhin über das DaUM-System 100 die dort hinterlegten bzw. Aktualisierungsdateien vom CURe abrufen werden können. Diese abgerufenen Aktualisierungsdateien können anschließend zweckmäßig lokal in einer eigenen, bei Fig. 1 aus Gründen der Übersichtlichkeit nicht dargestellten Datenhaltung, nachfolgend auch als LR ("local Repository") bezeichnet, des DaUM-Systems 100 abgelegt und/oder weiterverarbeitet werden. Eine solche Weiterverarbeitung beinhaltet insbesondere auch das Anlegen von eigenen, lokal verwalteten Aktualisierungs- bzw. Update-Repositorien, die zweckmäßig nur freigegebene Updates enthalten.

Andererseits ist über die programmtechnisch eingerichtet Geräteverwaltungs- und Aktualisierungs-Benutzereinrichtung 110 ein Schnittstellenauswahl- und - verbindungsdienst zum Auswählen und Einrichten einer Kommunikationsschnittstelle sowie zum Herstellen einer Kommunikationsverbindung zu einem, d.h. insbesondere zu wenigstens einem und bevorzugt zu jedem Automatisierungsgerät der Mehrzahl von angeschlossenen Automatisierungsgeräten 200a - 200d bereitgestellt. Zweckmäßig sind somit die installierten Geräte, d.h. die Automatisierungsgeräte 200a - 200d, durch eine Netzwerkadministration zuvor, z.B. mit einer entsprechenden IP-Adresse und den nötigen Netzwerkeinstellungen, so voreingestellt, dass diese dann über die eingerichtete Kommunikationsschnittstelle hergestellte Kommunikationsverbindung des DaUM-Systems 100 auch erreicht werden können.

Erfindungsgemäß ist ferner vorgesehen, dass mittels eines über die programmtechnisch eingerichtete Geräteverwaltungs- und Aktualisierungs-Benutzereinrichtung 110 bereitgestellten Auslesediensts nach entsprechender Aktivierung sodann aus jedem Automatisierungsgerät, zu dem die Kommunikationsverbindung hergestellt ist, dort hinterlegte Geräte-Typ-Information vom DaUM-System 100 ausgelesen und gespeichert wird. Auch die Geräte-Typ-Information kann somit zweckmäßig in der vorerwähnten eigenen Datenhaltung abgelegt werden.

Mittels eines ferner über die programmtechnisch eingerichtete Geräteverwaltungs- und Aktualisierungs-Benutzereinrichtung 110 bereitgestellten Aktualisierungsplanungsdienstes, eingerichtet zum Planen von Aktualisierungsanforderungen für jedes Automatisierungsgerät der Mehrzahl von Automatisierungsgeräten, zu dem ausgelesene Geräte-Typ-Information gespeichert ist, kann mittels des DaUM-Systems über eine Bedienmaske der Geräteverwaltungs- und Aktualisierungs-Benutzereinrichtung 110 vom Nutzer/Anwender, insbesondere von Personen der Geräteadministration, mit den in der vorerwähnten eigenen Datenhaltung enthaltenen Daten ein Aktualisierungs- bzw. Update-Plan, insbesondere für jedes Automatisierungsgerät individuell, erstellt werden, um jedes zu aktualisierende Automatisierungsgerät, insbesondere auch auf spezifische Assets eines jeweiligen Automatisierungsgeräts bezogen, mit neuen Versionen von Firmware oder anderer Software zu versorgen.

Insbesondere da, wie oben bereits aufgezeigt, eine Weiterverarbeitung von Aktualisierungsdateien und somit auch zur Versorgung der Automatisierungsgeräte mit Aktualisierungsdateien zweckmäßig nur freigegebene Aktualisierungsdateien oder Updates betreffen sollte, ist über die programmtechnisch eingerichtete Geräteverwaltungs- und Aktualisierungs-Benutzereinrichtung 110 ferner ein Prüf- und Zuweisungsdienst bereitgestellt, der zum Prüfen jeder abgerufenen Aktualisierungsdatei auf deren Freigabe in Bezug auf die Mehrzahl von Automatisierungsgeräten in funktionaler Abhängigkeit der gespeicherten Geräte-Typ-Information eingerichtet ist und, sofern die Prüfung einer der abgerufenen Aktualisierungsdateien zu einer Freigabe für ein Automatisierungsgerät führt, zum Zuweisen dieser Aktualisierungsdatei zu den zu diesem Automatisierungsgerät gespeicherten Geräte-Typ-Information. Zweckmäßig ist die Geräteverwaltungs- und Aktualisierungs-Benutzereinrichtung hierbei ferner programmtechnisch eingerichtet, zugewiesene Aktualisierungsdateien auch zu speichern, insbesondere in der bereits vorerwähnten eigenen Datenhaltung.

Ein über die programmtechnisch eingerichtete Geräteverwaltungs- und Aktualisierungs-Benutzereinrichtung 110 bereitgestellter Aktualisierungsdienst ist dann letztendlich eingerichtet, an jedes Automatisierungsgerät gemäß gespeicherter Geräte-Typ-Information die diesem jeweils zugewiesene Aktualisierungsdatei einschließlich eines Aktualisierungsbefehls zu übertragen, und zwar jeweils in funktionaler Abhängigkeit der für jedes Automatisierungsgerät geplanten Aktualisierungsanforderungen.

Zweckmäßig ist die Geräteverwaltungs- und Aktualisierungs-Benutzereinrichtung hierbei ferner programmtechnisch eingerichtet, den jeweiligen Aktualisierungsstatus in Bezug auf jedes Automatisierungsgerät, zu dem ausgelesene Geräte-Typ-Information gespeichert ist, zu protokollieren.

Das erfindungsgemäße Verwaltungs- und Aktualisierungssystem, im Rahmen der Erfindung auch als DaUM-System bezeichnet, ist folglich verallgemeinernd ausgebildet und eingerichtet, im wesentlichen folgende Funktionen bereitzustellen bzw. auszuführen:
- eine Funktion des Abrufens von Dateien zur Aktualisierung, insbesondere hinterlegt von den jeweiligen Herstellern von an ein OT-Netzwerk angeschlossenen Automatisierungsgeräten;
- eine Funktion des Einrichtens und Verwaltens von den Kommunikationsschnittstellen zu den an das OT-Netzwerk angeschlossenen Automatisierungsgeräten;
- eine Funktion des Verwaltens und Freigebens von Software-Dateien, welche an die angeschlossenen Automatisierungsgeräte verteilt werden sollen;
- eine Funktion des Einlesens von aktuellen Geräte-Typ-Informationen;
- eine Funktion des Planens von Updates, insbesondere einschl. des Überprüfens und Zuweisens von Dateien zu bestimmten Geräten mit Abbruchbedingungen, Startzeitpunkten;
- eine Funktion des Durchführens der Aktualisierungen auf den Geräten, d.h. insbesondere des Downloads und des Starts des Updatevorganges; sowie zweckmäßig
- eine Funktion des Protokollierens aller Ereignisse.

In Bezug auf den über die programmtechnisch eingerichtete Geräteverwaltungs- und Aktualisierungs-Benutzereinrichtung 110 bereitgestellten Aktualisierungsdateien-Abrufdienst und also insbesondere auf die bereitzustellende bzw. auszuführende Funktion des Abrufens von Dateien zur Aktualisierung können somit in praktischer Umsetzung mehrere, unterschiedliche Speichereinrichtungen als Quellen, nachfolgend als "Cure" ("Central Update Repositories") bezeichnet, definiert werden, von denen das DaUM System die Aktualisierungsdateien beziehen soll. Da die Aktualisierungsdateien in praktischer Umsetzung zweckmäßig als jeweilige Aktualisierungs-Datenpakete vorliegen bzw. übertragen werden, werden die Aktualisierungsdateien, nachfolgend auch als Update-Packages bezeichnet. Hierbei handelt es sich typischerweise um von den Geräteherstellern bereitgestellte Dienste für den maschinellen Zugriff auf Aktualisierungen bzw. Updates oder um eigene Datenhaltungssysteme des Anwenders, z.B. auch über das Internet. Es besteht aber auch die Möglichkeit die Update-Packages lokal per Massenspeichermedium, z.B. per USB-Stick oder per Dateitransfer dem DaUM System zur Verfügung zu stellen.

Eine Aktualisierungsdatei, also insbesondere ein Aktualisierungs-Datenpacket ("Update-Package") besteht vorzugsweise aus einer Beschreibungsdatei, der eigentlichen Update-Datei und begleitenden Dokumenten.

In dem Fall, dass das DaUM-System somit nach Einrichten einer Kommunikationsverbindung, zweckmäßig über eine Bedienoberfläche der Geräteverwaltungs- und Aktualisierungs-Benutzereinrichtung 110, mit einem CURe verbunden ist, fragt das DaUM-System vorzugsweise selbständig, z.B. auch zyklisch an, ob es eine neue Version einer Beschreibungsdatei für ein bestimmtes Automatisierungsgerät, insbesondere für ein von diesem umfassten Asset gibt. Insbesondere wird dann zunächst die Beschreibungsdatei heruntergeladen und kann im DaUM-System ausgewertet werden. Auch dies kann ferner zweckmäßig dem Nutzer/Anwender über eine entsprechend angepasste Bedienansicht angezeigt werden.

Diese Beschreibungsdatei beinhaltet zweckmäßig zumindest Informationen zum Dateityp, der Update-Datei, Herstellerinformationen, Versionsinformationen, Typinformationen, Abhängigkeiten zu vorhandenen Vorversionen und/oder Hardwareversionen, zu einer eindeutigen ID (Identifikationskennung), Checksumme, Freigabestatus und/oder zu weiteren begleitenden Dokumenten, wie z.B. Lizenzinformationen, Änderungsvermerken ("Changenotes"). Versionshinweisen ("release notes"). Optional können selbstverständlich weitere Informationen mitgeteilt werden wie z.B. die Dauer eines typischen Updatevorganges. Der Nutzer/Anwender kann anschließend zweckmäßig über eine Bedienoberfläche jeweils gewünschte Dateien aus der Beschreibungsdatei auswählen und das DaUM-System lädt daraufhin die beinhalteten oder auch vorzugsweise lediglich ausgewählten Dateien als Update Package aus dem Cure herunter.

Ist hierbei die oder auch jede Beschreibungsdatei ferner zweckmäßig vom Hersteller mit einer kryptographischen Signatur versehen, kann das DaUM-System diese Signatur überprüfen, um sicher zu stellen, dass die Datei nicht von einem möglichen Angreifer verändert wurde. Hierzu kann in einem Speicher der Geräteverwaltungs- und Aktualisierungs-Benutzereinrichtung 110 insbesondere eine Anzahl von öffentlichen Schlüsseln hinterlegbar bzw. bereits hinterlegt sein und der bereitgestellte Prüf- und Zuweisungsdienst unter Verwendung dieser Anzahl von öffentlichen Schlüsseln diese jeweils in den abgerufenen Aktualisierungsdateien enthaltenen, entsprechend mit einem privaten Schlüssel erstellten Signaturen prüft.

Insbesondere basierend auf XAdES ("XML Advanced Electronic Signatures"), welches bekanntermaßen eine Zusammenstellung von Erweiterungen für die W3C-Empfehlung XML-DSig ist, durch den die Verwendung erweiterter elektronischer Signaturen möglich gemacht wird und genaue Profile für XML-DSig zur Benutzung mit berechtigter elektronischer Signatur in der Bedeutung der zum Zeitrang hiesiger Anmeldung gültigen EU-Direktive 1999/93/EC spezifiziert, wobei ein wichtiger Faktor von XAdES ist, dass elektronisch signierte Dokumente für lange Zeit gültig bleiben, auch wenn die zugrundeliegenden kryptografischen Algorithmen geknackt wurden, kann das DaUM-System hierbei zum einen zweckmäßiger Weise nur die Signatur selbst überprüfen (XAdES-B-Niveau ) ohne, das die Erweiterungen der Signatur geprüft werden. Alternativ kann jedoch auch vorgesehen sein, dass das DaUM-System auch die Überprüfung der Signatur mit den Erweiterungen nach XAdES-Level LT oder LTA unterstützt.

Insbesondere wird jedoch die Überprüfung der Beschreibungsdatei im DaUM-System durchgeführt, bevor die diesbezüglichen Daten weiterverwendet werden.

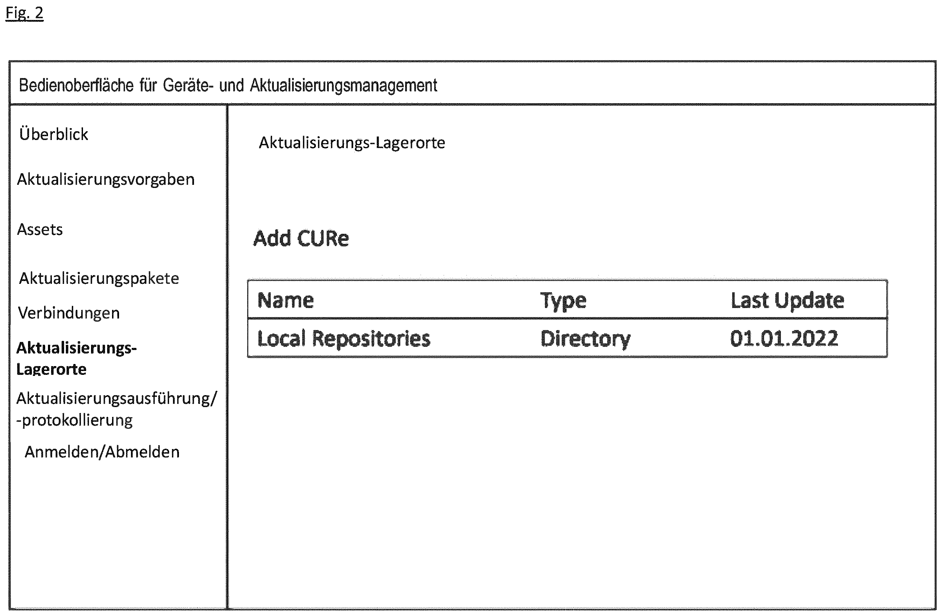

Alle dem DaUM-System zugeführten Update Packages werden zweckmäßig im DaUM-System in einer lokalen Datenhaltung (LR - "Local Repository") abgelegt und können von dort aus weiterverwendet werden. Fig. 2 zeigt eine beispielhafte Bedienoberfläche für ein Geräte- und Aktualisierungsmanagement auf einer erfindungsgemäß eingerichteten Geräteverwaltungs- und Aktualisierungs-Benutzereinrichtung 110 mit einer für die Übersicht von definierbaren bzw. bereits definierter Aktualisierungs-Lagerorte, beispielsweise auch eine lokale Datenhaltung "Local Repositories" als Datenquelle "Cure" betreffend. Der Vorteil bei der Verwendung eines LR als Cure ist, dass während eines Updates eines Automatisierungsgeräts, insbesondere eines von diesem umfassten Assets, keine aktive Verbindung zu einem CURe, sei es über einen USB-Stick oder auch über das Internet, benötigt wird.

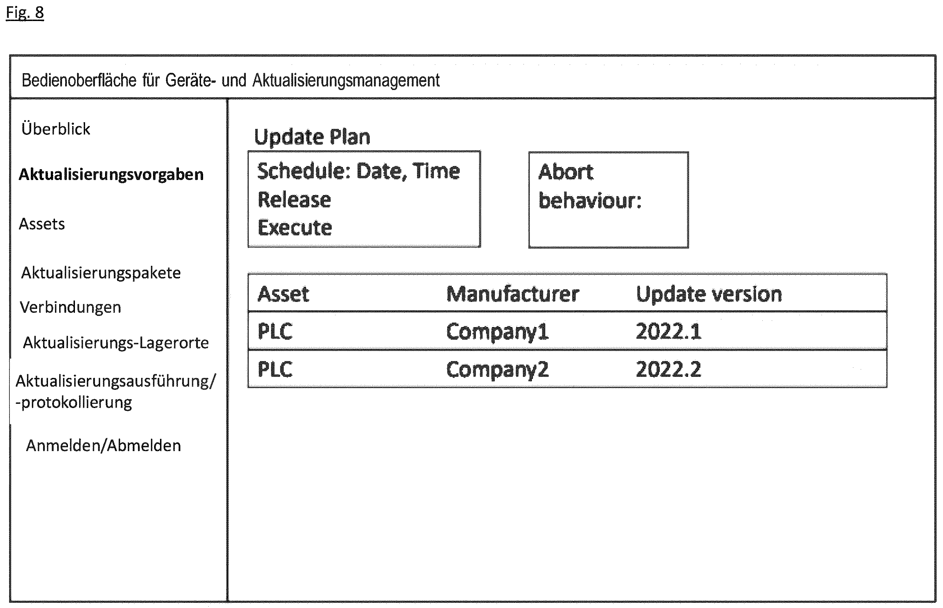

Wie oben bereits erwähnt, kann der Aktualisierungsdateien-Abrufdienst des DaUM System bevorzugt eingerichtet sein, selbstständig, zweckmäßig in regelmäßigen, einstellbaren Zyklen automatisch zu prüfen, ob sich für mindestens eines der über das somit quasi als Zwischenkomponente eingerichtete DaUM-System verwalteten Automatisierungsgeräte ein neues, kompatibles Update-Package auf der zentralen Quelle, d.h. dem Cure, befindet und kann dann z.B. auch eine Mitteilung an den Nutzer/Anwender senden oder diesem über die entsprechend angepasste Bedienansicht anzeigen. Diese Mitteilung bzw. Anzeige kann den Nutzer/Anwender zweckmäßig sodann auch darüber informieren, ob es sich z.B. um ein kritisches Sicherheitsupdate handelt, welches dringend aufgespielt werden soll, oder auch einen Hinweis geben, dass es für bereits geplante Update-Pläne (vgl. auch Fig. 8) ein neues Update-Package gibt.

Insbesondere mittels des über die programmtechnisch eingerichtete Geräteverwaltungs- und Aktualisierungs-Benutzereinrichtung 110 bereitgestellten Prüf und Zuweisungsdienstes, insbesondere betreffend die Funktion des Verwaltens und Freigebens von Software-Dateien, welche an die angeschlossenen Automatisierungsgeräte, insbesondere Assets verteilt werden sollen, könne somit die heruntergeladenen, zusammengehörenden Dateien, d.h. die aus der zu einem Update-Paket gehörenden Gesamtheit aus Beschreibungsdatei, Update-Datei und begleitenden Dokumenten in der weiteren und für die weitere Bearbeitung bevorzugt wieder zunächst als Update Package zusammengefasst werden, bevor diese zweckmäßig in einer eigenen, lokalen Datenhaltung zur weiteren Verarbeitung abgelegt oder zwischengespeichert werden. Wie vorstehend bereits aufgezeigt, erhält das DaUM-System somit neben den reinen Update-Dateien bevorzugt auch zusätzliche begleitende Dokumente, wie z.B. die oben erwähnten Änderungsvermerke, Lizenzbedingungen, etc., die zweckmäßig in den zugehörigen Beschreibungsdateien auch jeweils einzeln angeführt sind.

Ferner ist zweckmäßig vorgesehen, insbesondere aus Gründen der Sicherheit, , dass die Freigabe der abgerufenen Aktualisierungsdateien für ein Automatisierungsgerät nach entsprechender Prüfung nochmals für jedes Update Package für die weitere Bearbeitung bzw. Nutzung eine explizite Freigabe von einem autorisierten Nutzer/Anwender mit der Berechtigung zur Freigabe von Updates zur weiteren Nutzung im DaUM-System erfolgen muss, d.h. insbesondere über die Bedienoberfläche bestätigt werden muss, sodass ohne entsprechende explizite Freigabe das Update Package insbesondere nicht auch von jedem anderen Anwender verwendet werden kann.

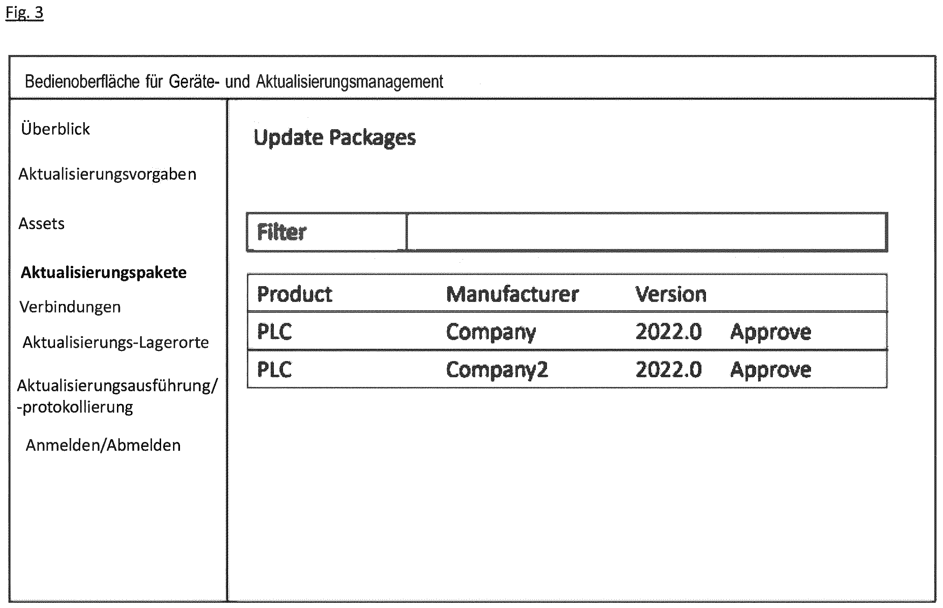

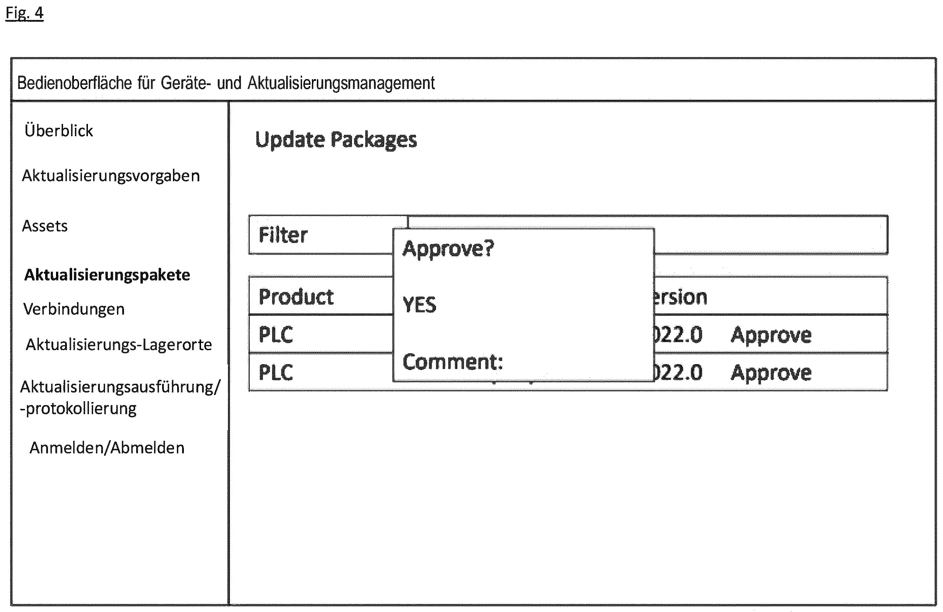

Fig. 3 zeigt hierzu die beispielhafte Bedienoberfläche mit einer für die Anzeige/Auswahl von eingelesenen bzw. heruntergeladenen Aktualisierungsdateien oder Update Packages geöffneten Bedienmaske und Fig. 4 die beispielhafte Bedienoberfläche mit einer für die explizite Freigabe ("Approve") der Aktualisierungsdateien oder Update Packages geöffneten Bedienmaske.

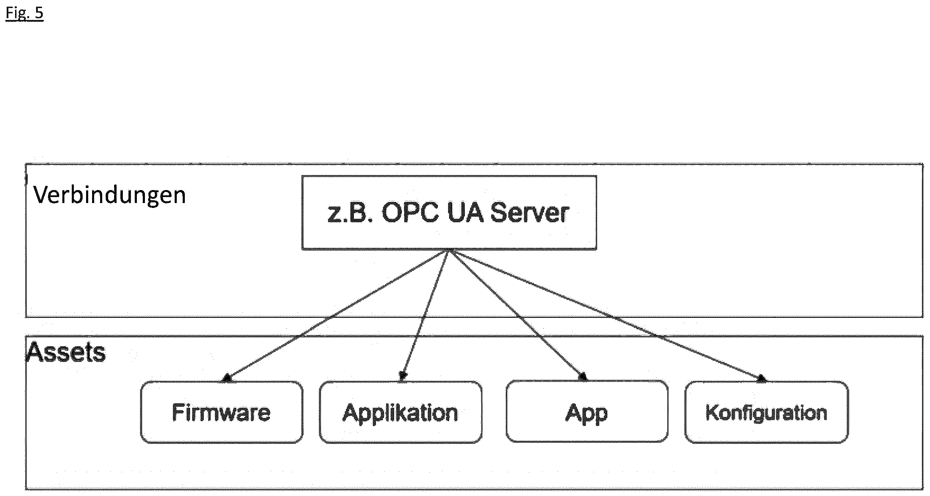

Mittels des über die programmtechnisch eingerichtete Geräteverwaltungs- und Aktualisierungs-Benutzereinrichtung 110 bereitgestellten Schnittstellenauswahl- und -verbindungsdienstes lassen sich insbesondere auch die Funktionen des Einrichtens und Verwaltens von Kommunikationsschnittstellen zu den Automatisierungsgeräten von dem quasi als Zwischenkomponente eingerichtete DaUM-System zweckmäßig verwalteten. Fig. 5 zeigt hierzu eine beispielhafte Übersicht einer mittels der Geräteverwaltungs- und Aktualisierungs-Benutzereinrichtung 110 gemäß der Erfindung möglichen Kommunikationsverbindung zu einem Automatisierungsgerät, im dargestellten Beispiel zu einem OPC UA Server des Automatisierungsgerätes als Kommunikationspartner. Eine solche Kommunikationsverbindung kann somit bevorzugt auch mehrere Assets des Automatisierungsgerätes verbinden. Im Beispiel einer SPS kann z.B. ein entsprechender OPC UA Server der SPS mögliche Verbindungen dieses Gerätes zu umfassten Assets, wie Firmware, Applikationsprogramm, sonstiger APP, Lizenzen, Konfigurationen etc. dem DaUM System bereitstellen.

Die Geräteverwaltungs- und Aktualisierungs-Benutzereinrichtung 110 ist somit programmtechnisch bevorzugt eingerichtet, ausgelesene Geräte-Typ-Information jeweils zugeordnet zu einem hierdurch spezifizierten, vom Automatisierungsgerät umfassten Asset, insbesondere betreffend Firmware, Anwendung oder Konfiguration des Automatisierungsgerätes, zum Planen der Aktualisierungsanforderungen jeweils für die durch die gespeicherten Geräte-Typ-Information spezifizierten Assets zu speichern und die abgerufenen Aktualisierungsdatei jeweils in Bezug auf die durch die gespeicherten Geräte-Typ-Information spezifizierten Assets zu prüfen und freigegebene Aktualisierungsdateien dann den jeweiligen Assets zuzuweisen.

Eine Kommunikationsverbindung, nachfolgend auch als Connections bezeichnet, beschreibt hierbei somit insbesondere die Verbindung bis hin zu einem zu aktualisierenden Asset eines Automatisierungsgerätes, wie. Z.B. einer Firmware, einer Applikation, einer Anwendungssoftware (App) oder einer spezifischen Konfiguration

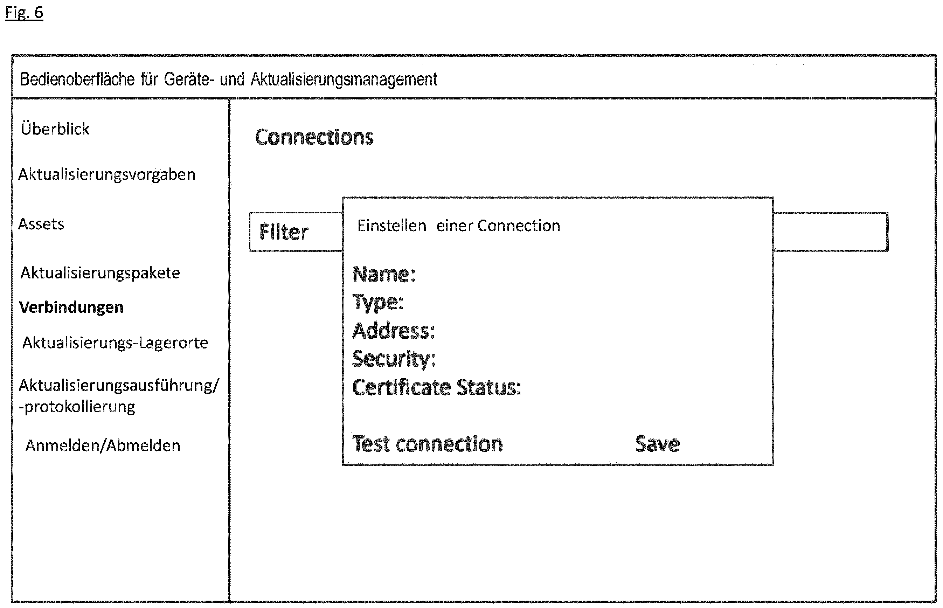

Fig. 6 zeigt hierzu eine beispielhafte Bedienoberfläche gemäß Fig. 2 mit einer zum Vorgeben von Kommunikationsschnittstellen und Kommunikationsverbindungen geöffneten Bedienmaske, über die solche Verbindungen eingerichtet werden können, über welche die jeweiligen Geräte mit dem DaUM System erreicht und verwalten werden können.

Unter dem Menüpunkt Verbindungen bzw. Connections (vgl. Fig. 6) kann folglich die Verbindung zu einem Kommunikationspartner individuell eingestellt werden. Wie vorstehend bereits erwähnt, kann es sich hierbei z.B. um einen OPC UA Server handeln, der anschließend mindestens ein Asset repräsentiert. Aber auch andere Verbindungstypen, wie z.B. SNMP ("Simple Network Management Protocol", HawkBit (eine offene Plattform-Lösung eines Frameworks, um die Funktionalität eines "Softwareupdate" in eine IoT ("Internet of Things")-Lösung oder -Plattform zu integrieren) .etc. und/oder Verbindungen zu anderen Kommunikationspartnern sind somit zweckmäßig im Rahmen der Erfindung einrichtbar. Folglich ist die Geräteverwaltungs- und Aktualisierungs-Benutzereinrichtung 110 somit insbesondere eingerichtet, dass in Abhängigkeit der Automatisierungsgeräte und/oder zum Betreiben des Aktualisierungsdateien-Abrufdienstes unterschiedliche Protokolle aus einer Mehrzahl von Datenaustauschprotokollen, insbesondere umfassend standardisierte Protokolle, wie z.B. OPC UA, SNMP oder DCP, und/oder Open-Source-Protokolle im Rahmen der Erfindung genutzt werden können.

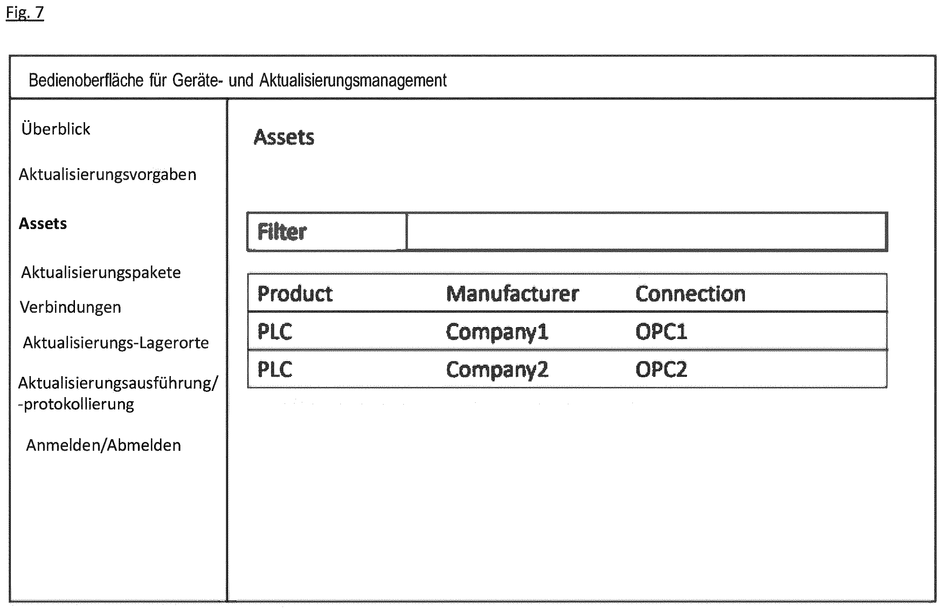

Zweckmäßig wird ferner im Menüpunkt Verbindungen bzw. Connections auch der aktuelle Status der Verbindung dargestellt und es kann bis hin zu nach Assets innerhalb der Connections gescannt werden. Die gefundenen Assets können dann wiederum in der Übersicht im Menüpunkt Assets mit weiteren Informationen angezeigt werden (vgl. Fig. 7). Hier können die Assets dann vorzugsweise auch bearbeitet werden, z.B. können den einzelnen Assets Tags zugewiesen werden, d.h. die Assets werden mit zusätzlichen Informationen ausgezeichnet, woraufhin diese Assets dann im weiteren Verlauf bei der Erstellung von Update Plänen zur Verfügung stehen. Das DaUM-System kann folglich den aktuellen Stand eines jeweiligen Assets erkennen, z.B. der Software/Firmware, und insbesondere dem Nutzer/Anwender ein Update auf eine neuere Version vorschlagen oder alternativ auch ein Update selbstständig aktivieren, sofern es eine neue, insbesondere freigegebene Version für das Asset gibt.

Was den über die programmtechnisch eingerichtete Geräteverwaltungs- und Aktualisierungs-Benutzereinrichtung 110 bereitgestellten Aktualisierungsplanungsdienst zum Planen von Aktualisierungsanforderungen für jedes Automatisierungsgerät der Mehrzahl von Automatisierungsgeräten, zu dem ausgelesene Geräte-Typ-Information gespeichert ist, betrifft, können Dateien somit zweckmäßig auch zu bestimmten Assets zugewiesen werden, sowie Abbruchbedingungen, Startzeitpunkte, festgelegt werden.

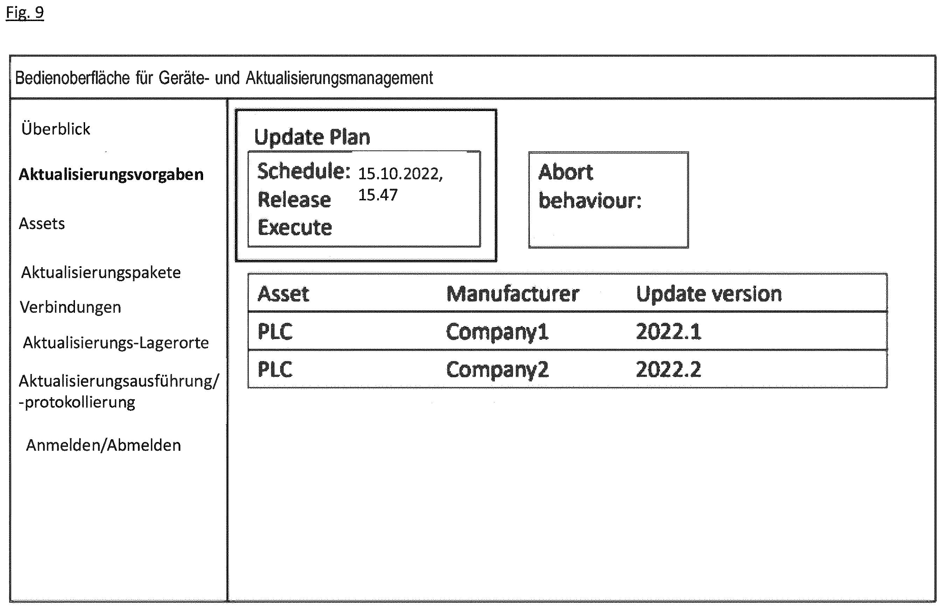

Über das quasi als Zwischenkomponente eingerichtete DaUM-System können für den DaUM Service somit zweckmäßig nicht nur ein sondern auch mehrere Aktualisierungs- bzw. Updatepläne, auch hinsichtlich eines bestimmten Assets, angelegt werden. Diese Pläne enthalten hierzu die zu aktualisierenden Assets sowie die dazugehörigen Aktualisierungsdateien bzw. Update Pakete (vgl. Fign. 8, 9).

Der Nutzer/Anwender kann somit auch einen somit im Wesentlichen beliebigen Zeitpunkt in der Zukunft festlegen, an dem der Update Plan beginnen soll oder sofort das Update starten oder auch die Planung dem DaUM System zur selbstständigen Aktivierung von Updates überlassen. Zweckmäßig ist jedoch vorgesehen, dass ein Update Plan von einem autorisierten Nutzer zunächst freigegeben werden muss.

Die einzelnen Bestandteile (Assets) der Automatisierungsgeräte, die zu aktualisieren sind, können dementsprechend auswählt werden und vorzugsweise auch Automatisierungsgeräte und Assets unterschiedlichen Typs in einem Update Plan zusammengefasst werden bzw. sein. Auch kann z.B. die Reihenfolge der Assets im Update Plan, d.h. die zeitliche Abfolge von durchzuführenden Überprüfungen und/oder Updates in Bezug auf die einzelnen Assets, verändert werden und/oder es können zweckmäßig dem Nutzer/Anwender alle passenden Update Pakete, die auf dem DaUM System für den Aktualisierungsdienst vorhanden sind, angezeigt werden, sodass daraus auch flexibel bestimmte, für eine Aktualisierung gewünschten Update Pakete ausgewählt werden können.

Wie oben bereits aufgezeigt, wird dem Nutzer/Anwender zweckmäßig ferner die Möglichkeit an die Hand gegeben, das Abbruchverhalten für einen Update Plan festzulegen. Das Abbruchverhalten legt z.B. fest, wie das DaUM-System in Fällen reagieren soll, in denen die Aktualisierung eines Assets fehlschlägt. Es ist somit auch möglich, die Abbruchstrategie für alle Assets im Plan und/oder unterschiedliche Strategien für verschiedene Assets festzulegen.
- Beispielsweise kann individuell vorgesehen sein, den Update-Plan zu stoppen und alle Assets in ihrem aktuellen Zustand zu belassen ("stop and abort all"), d.h. bereits aktualisierte Assets behalten die Aktualisierung bei und noch nicht aktualisierte Assets erfahren keine Aktualisierung mehr.
- Beispielsweise kann individuell vorgesehen sein, den Update-Plan zu stoppen und zusätzlich einen Versions-Rollback für alle Geräte durchzuführen, die bereits durch den Plan aktualisiert wurden ("stop and rollback all").
- Beispielsweise kann individuell vorgesehen sein, fehlgeschlagene Geräte zu überspringen, indem sie so belassen werden, wie sie sind, und die Aktualisierung mit dem nächsten Gerät wird fortzusetzen ("skip and proceed").
- Beispielsweise kann individuell vorgesehen sein, dass nur die fehlgeschlagenen Geräte zurückgerollt werden, d.h. auf die Vorgänger Version zurückversetzt werden, und der Update-Plan ansonsten fortgesetzt wird ("rollback and proceed"). Sollte hierbei ein Rollback allerdings fehlschlagen, kann das Gerät z.B. auch mit dem dokumentierten Fehlerzustand übersprungen werden.

Zweckmäßig sind die erstellten Update-Pläne standardmäßig voneinander unabhängig und werden sequentiell abgearbeitet. Es gibt aber z.B. auch die Möglichkeit mehrere Pläne gleichzeitig, parallel auszuführen. In diesem Fall ist es von Vorteil, das DaUM-System zum Prüfen einzurichten, ob sich gleiche Assets in den Plänen befinden und einen gleichzeigten Zugriff auf dasselbe Asset verhindert, insbesondere auch den Nutzer/Anwender über dieses Ereignis informiert. Bei parallel ausgeführten Plänen kann bevorzugt, insbesondere durch den Nutzer/Anwender, auch festlegt werden, ob es eine Abhängigkeit zwischen den einzelnen Plänen geben soll. Beispielsweise kann je nach (teilweisen Miss-)Erfolg eines/mehrerer Updates in einem ersten Plan, z.B. in einem Plan A, ein parallel ausgeführter zweiter Plan, z.B. Plan B, ganz oder nur teilweise ausgeführt/gestoppt werden.

Diese Abbruchstrategien hierzu können im Wesentlichen gleich zu den Abbruchstrategien in Bezug auf die einzelnen Assets ausgelegt sein. Dem Nutzer/Anwender können folglich auch hierbei die Fortschritte der Updates als auch die Ergebnisse der Updates innerhalb der Abhängigkeitsbeziehungen zweckmäßig angezeigt werden. Das System kann aber z.B. auch derart eingerichtet werden bzw. sein, dass die Pläne nacheinander, aber abhängig voneinander ausgeführt werden. In diesem Fall beginnt ein Plan sobald, oder erst wenn, der vorherige Plan beendet wurde. Auch hier kann ausgewählt bzw. eingestellt werden bzw. sein, wie die Abbruchstrategie sein soll. Diese Abbruchstrategien können wiederum im Wesentlich gleich zu den Abbruchstrategien der Assets sein. Beispielsweise wird je nach (teilweisen Miss-)Erfolg eines/mehrerer Updates in einem ersten Plan, z.B. in Plan A, ein darauffolgender zweiter Plan, z.B. Plan B, ganz oder nur teilweise ausgeführt. Zweckmäßig werden dem Nutzer werden die Fortschritte der Updates als auch die Ergebnisse der Updates innerhalb der Abhängigkeitsbeziehungen angezeigt.

In Bezug auf über die programmtechnisch eingerichtete Geräteverwaltungs- und Aktualisierungs-Benutzereinrichtung 110 bereitgestellten Aktualisierungsdienst, d.h. betreffend die Funktion des Durchführens der Aktualisierungen auf den Automatisierungsgeräten kann ferner zweckmäßig ein Zeitpunkt in der Zukunft festgelegt werden bzw. sein, an dem der Update Plan beginnen soll oder sofort das Update starten (vgl. Fign. 9). Bevorzugt muss hierzu ein Update Plan jedoch von einem autorisierten Nutzer freigegeben werden.

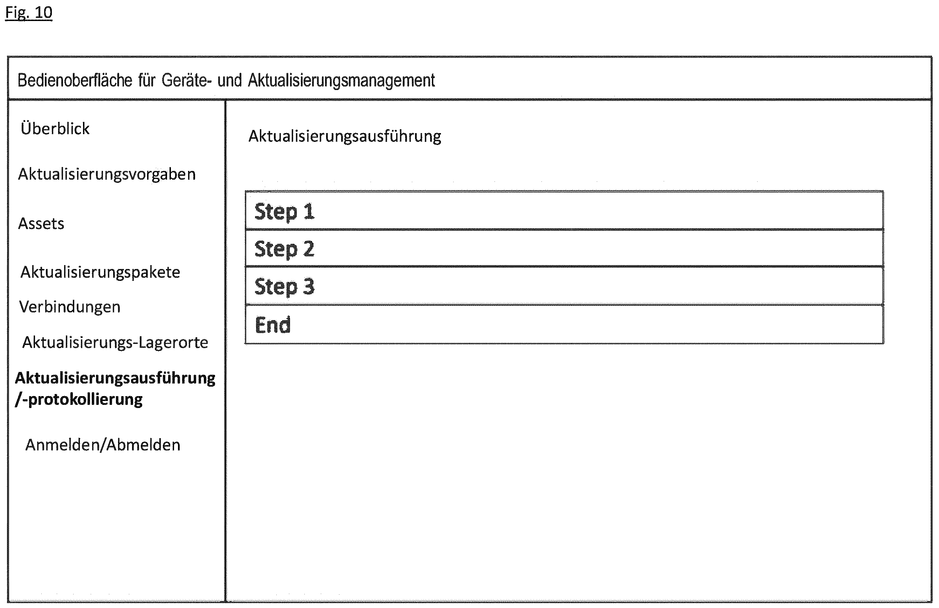

Sobald der Updatevorgang beginnt, wird die Aktualisierungsdatei auf das Automatisierungsgerät gemäß der Reihenfolge übertragen und ein entsprechender Aktualisierungsbefehl gesendet. Sobald ein Automatisierungsgerät, insbesondere spezifiziertes, vom Automatisierungsgerät umfasstes Asset, erfolgreich aktualisiert ist wird dieses zweckmäßig protokolliert und mit dem nächsten Gerät fortgefahren (vgl. auch Fig. 10).

In Bezug auf die Funktion des Protokollierens von Ereignissen, werden bevorzugt alle Schritte, und insbesondere auch Ereignisse, die während der Abarbeitung eines Update Plans stattfinden, in Art eines Log- Buchs festgehalten. Dem Anwender können sodann die Status der einzelnen Assets vor und nach dem durchgeführten Update zweckmäßig angezeigt werden.

Von Vorteil ist, dass die Geräteverwaltungs- und Aktualisierungs-Benutzereinrichtung 110 auf einem Edge-PC, auf einem der Mehrzahl von Automatisierungsgeräte selbst oder auf einer zentralen Server-Instanz des Anwenders programtechnisch eingerichtet sein kann. Z.B. kann hierfür auch ein Datenträger mit einem darauf gespeicherten und derart ausgebildeten Programmcode vorgesehen sein, dass eine an ein OT-Netzwerk anschließbare Datenverarbeitungseinrichtung, wenn sie mit dem Programmcode programmiert ist, eine gemäß vorbeschriebene, eingerichtete Geräteverwaltungs- und Aktualisierungs-Benutzereinrichtung bereitstellt.

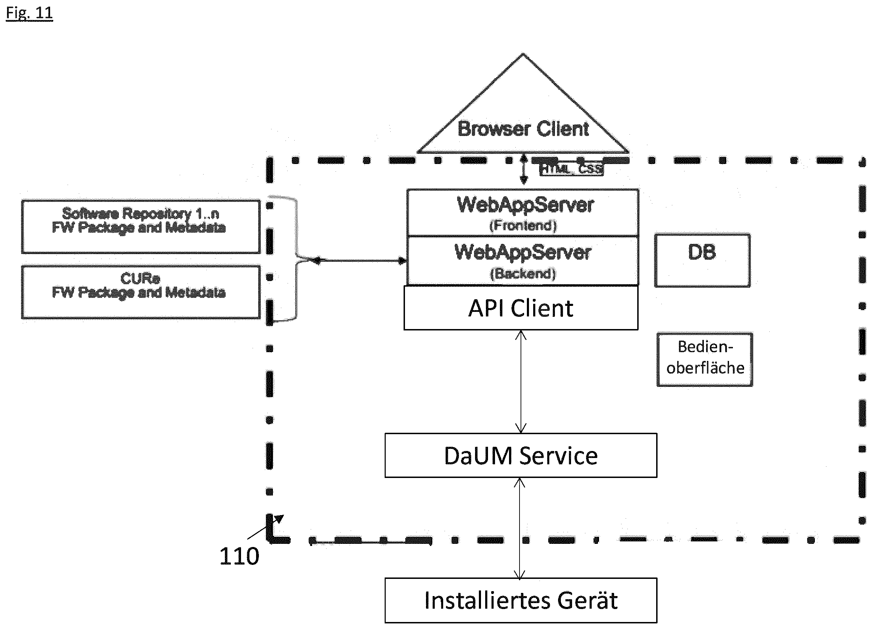

Auch kann beispielsweise das gesamte DaUM-System (vgl. z.B. auch Fig. 11) als nachladbare Funktion bereitgestellt werden. Dieser Service wird bevorzugt als eine containerisierte Software (Docker) angeboten und kann so zweckmäßig auf diversen Geräteklassen, z.B. auf allen Geräteklassen der Produktlinie PLCnext der Anmelderin, gleichsam betrieben werden. Eine Anwendung auf Industriecomputern als auch die Anwendung auf einer lokal SPS sind damit realisierbar.

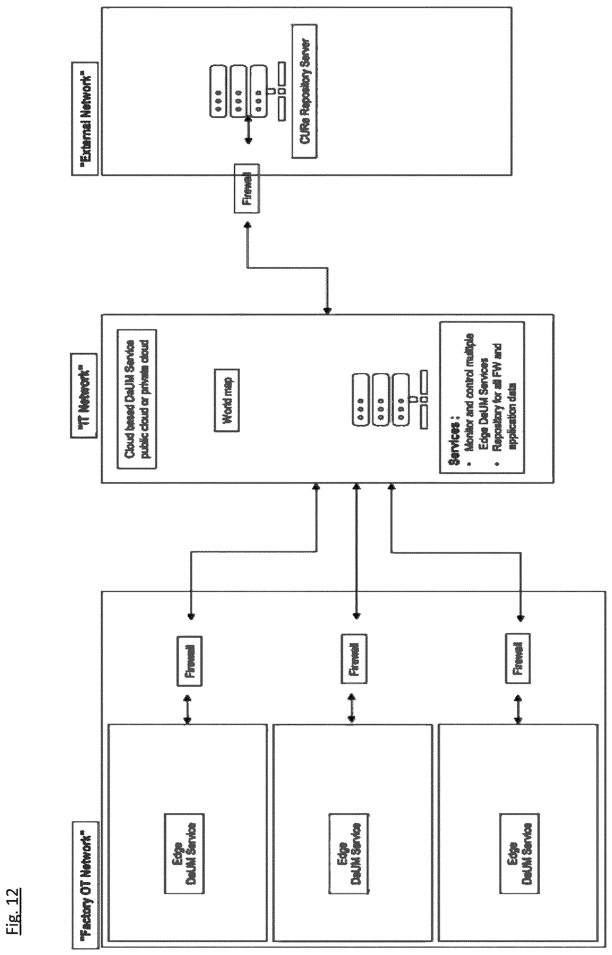

Von Vorteil ist ferner, dass mit dem erfindungsgemäßen DaUM-System auch eine überlagerte Verwaltungsebene von vielen, lokalen DaUM Services bereitstellen gestellt werden kann. So ist hierzu zweckmäßig eine Verwaltungsplattform umfasst, die einer Vielzahl von vorstehend beschriebenen Geräteverwaltungs- und Aktualisierungs-Benutzereinrichtungen hierarchisch überlagert ist (vgl. z.B. Fig. 12) und zum Bereitstellen von Aktualisierungsdateien eingerichtet ist, die in einer Speichereinrichtung zum Abrufen durch die Vielzahl von Geräteverwaltungs- und Aktualisierungs-Benutzereinrichtungen hinterlegt sind.

So kann hierdurch als weitere Möglichkeit, eine Lösung umgesetzt sein, mit der die Verwaltung von vielen, lokalen DaUM Services mittels einer überlagerten Verwaltung erfolgt, insbesondere mit einer in einem IT-Netzwerk angeordneten Verwaltungsplattform, insbesondere mit einer als Cloud-basierten Plattform eingerichteten Verwaltungsebene. Diese Verwaltungsebene bietet für die Automatisierungsgeräte und davon umfassten Assets, die mit einem jeweils lokalen DaUM Service verbunden sind, somit die Möglichkeit die Geräteinformationen von überall zentral abzurufen. Beispielsweise kann die Speichereinrichtung hierbei auch in einem weiteren, mit dem IT-Netzwerk verbunden externen Netzwerk (vgl. Fig. 12) angeordnet sein.

Ein wesentlicher Vorteil dieser überlagerten Verwaltungsebene ist, dass die jeweilige Automatisierungsanlage bzw. das jeweilige OT-Netzwerk nicht mehr zwingend vor Ort besichtigt und geprüft werden muss, um den aktuellen Zustand der Anlage zu beurteilen. Ein Blick in die überlagerte Verwaltungsebene genügt in der Regel. Jede Statusmeldung jedes Hardwaregeräts kann dort in Klartext übersetzt werden, so dass kein Expertenwissen mehr benötigt ist, um diese zu verstehen. Darüber hinaus ermöglicht die überlagerte Verwaltungsebene, die Geräte-Firmware auf dem neuesten Stand zu halten, so dass sichergestellt ist, dass die Geräte immer mit den neuesten Sicherheits-Patches und Leistungsverbesserungen versehen sind. Weiterhin kann man über die überlagerte Verwaltungsebene die Funktionen der lokalen DaUM Services benutzen. Diese überlagerte Verwaltungsebene bezieht die Update-Pakete somit z.B. über das Internet von dem entsprechenden Hersteller des zu updatenden Automatisierungsgerätes und verteilt dieses an die verbundenen DaUM Services. Diese lokalen DaUM Services verteilen die Update-Dateien dann lokal bis hin an die verbundenen Assets. Damit muss lediglich der DaUM Service eine Verbindung zur Verwaltungsebene haben, nicht jedes einzelne Automatisierungsgerät oder sogar Asset.

Zweckmäßig können in einer Übersichtskarte die Positionen der einzelnen lokalen DaUM Services angezeigt werden. Beim Wählen eines lokalen DaUM Services gelangt der Nutzer an die Informationen des an dem DaUM Service angeschlossenen Automatisierungsgeräts und/oder Assets und kann die Verwaltung des DaUM Services und der Automatisierungsgeräte und/oder Assets vornehmen.

Über diese überlagerte Verwaltungsebene ist es somit in praktischer Umsetzung auch möglich die verteilten DaUM Services selbst zu aktualisieren, falls es neue Versionen des DaUM Services gibt. Damit können dann nicht nur die Automatisierungsgeräte und/oder Assets verwaltet werden, sondern das gesamte System kann von zentraler Stelle aus beobachtet und aktualisiert werden.

Diese Verwaltungsebene kann somit z.B. insbesondere sowohl in einer privaten Cloudumgebung oder in einem IT-Dienst des Anwenders betrieben werden. Dazu wird bevorzugt in einem "Container" alles mitgeliefert, was zum Betreiben des Dienstes nötig ist. Der Anwender muss nur ein Container Management bereitstellen.

Ein mögliches Ausführungsszenarium in Bezug auf die Verwaltung und Aktualisierung von an ein OT-Netzwerk angeschlossenen Automatisierungsgeräten einer Automatisierungsanlage unter Nutzung des erfindungsgemäßen Verwaltungs- und Aktualisierungssystems kann beispielsweise wir folgt sein:
Die für das Update benötigten Daten werden entweder über eine https basierende Verbindung von einem von einem Hersteller, z.B. der Anmelderin, betriebenen Repository automatisiert abgerufen, oder können lokal über einen USB-Stick auf dem DaUM-System abgelegt werden (Local Repository). Diese Daten bestehen zum einen aus der Update-Datei selbst als auch aus den Changenotes, Lizenzinformationen und einer Beschreibungsdatei mit Meta-Informationen. Die Beschreibungsdatei ist z.B. JSON ("JavaScript Object Notation") codiert und beinhaltet Informationen zu den Assets, auf denen das Update angewendet werden kann. Bekanntermaßen sind Versionsinformationen herkömmlicher Weise eine Voraussetzung für das Update. Beim Einlesen der Daten werden diese überprüft und dem Anwender angezeigt.

Bevor ein Update auf einem oder mehreren Assets durch den Update-Planer durchgeführt werden kann, wird die entsprechende Datei zum Update von einer autorisierten Person mit der entsprechenden Rolle im DaUM System freigegeben. Solange ein Update-Package nicht freigegeben ist, kann dieses nur durch autorisierte Personen verwendet werden. Dieses kann explizit gewünscht sein, um das Update-Package für Testzwecke in einem geschützten Bereich zu verwenden. Um weitere, Nutzerspezifische Informationen, zu den Update-Packages hinzuzufügen, kann der Nutzer/Anwender z.B. sogenannte Tags hinzufügen. Anhand dieser Tags kann der Nutzer/Anwender im weiteren Prozess die gewünschten Update-Packages filtern.

Die zu verwaltenden Geräte und/oder Assets werden über verschiedene Kommunikationswege erreicht. Hierzu muss der Anwender die Kommunikationsschnittstelle konfigurieren. Für Verbindungen über OPC UA muss ein OPC UA Server der Automatisierungsgeräte konfiguriert werden. Für das Verteilen von Software an Geräte über Hawkbit muss ein Hawkbit Server parametriert werden.

Die erreichbaren Automatisierungsgeräte/Assets werden im DaUM-System mit ihren Versionsinformationen angezeigt. Diese sind frei wählbar und können z.B. Informationen zum Aufbauort, Maschinennummer etc. beinhalten. Anhand dieser Tags kann der Nutzer im weiteren Prozess die gewünschten Automatisierungsgeräte/Assets filtern.

Basierend auf dem Status der Update-Dateien und den erreichbaren Geräten kann ein Anwender mit der Berechtigung dazu ein Update planen. Hierbei wählt er aus einer Liste der erreichbaren Automatisierungsgeräte/Assets die zu aktualisierenden aus. Die ausgewählten werden in den Plan übernommen und der aktuelle Versionszustand angezeigt. Je nachdem, welche Version der Software/Firmware auf den Automatisierungsgeräten/Assets vorhanden ist, werden möglichen Update-Dateien vorgeschlagen. Diese Prüfung findet nicht auf den Endgeräten statt, sondern im DaUM System. Der Nutzer wählt die anzuwendenden Dateien für die Automatisierungsgeräte/Assets aus und stellt einen Zeitpunkt ein an dem das Update beginnen soll. Außerdem kann der Anwender definieren, wann ein Update-Plan abgebrochen werden soll. Hier gibt es z.B. folgende Bedingungen:
- Anhalten und alle abbrechen - dies lässt alle Assets in ihrem aktuellen Zustand;
- Stopp und Rollback - führt einen Versions-Rollback bei allen Assets durch, die bereits durch den Plan aktualisiert wurden.;
   Überspringen und fortsetzen - überspringt das fehlgeschlagene Asset, indem es so belassen wird, wie es ist, und setzt die Aktualisierung mit dem nächsten Asset fort;
- Rollback und Fortfahren - nur das fehlgeschlagene Asset wird rückgängig gemacht und der Plan wird fortgesetzt. Am Ende des Planungsprozesses muss der Plan freigegeben werden, damit dieser ausgeführt werden kann. Ansonsten wird dieser nur gespeichert.

Sobald der Zeitpunkt für einen freigegebenen Plan erreicht wurde, oder der Anwender den Plan manuell gestartet hat, beginnt das DaUM System die Update Packages an die Automatisierungsgeräte/Assets zu verteilen und das Update anzustoßen. Nach dem Download der Dateien auf ein Automatisierungsgerät/Asset wird zusätzlich überprüft, ob die Datei unverändert angekommen ist und je nachdem ob der Zustand des Automatisierungsgeräts/Assets ein Update erlaubt, wird dann das Update ausgeführt. Ein erfolgreiches oder nicht erfolgreiches Update wird an dem DaUM System zurückgemeldet. Sollte ein Update eines Automatisierungsgeräts/Assets fehlschlagen, wird entsprechend der gewählten Abbruchbedingung weiter mit dem Plan verfahren Sämtliche Vorgänge im DaUM System werden mit Zeitstempel und Angabe des Anwenders protokolliert und stehen im DaUM System zur Verfügung.

Zusammenfassend lässt sich folglich festhalten, dass das erfindungsgemäß ausgebildete Verwaltungs- und Aktualisierungssystem, "DaUM System" eine herstellerunabhängige Verwaltung und Aktualisierung von Automatisierungsgeräten an ein OT-Netzwerk angeschlossenen Automatisierungsgeräten mittels einer quasi als Zwischenkomponente eingerichteten und gleichermaßen an das OT-Netzwerk angeschlossenen Geräteverwaltungs- und Aktualisierungs-Benutzereinrichtung ermöglicht. Zur Einrichtung einer solchen Geräteverwaltungs- und Aktualisierungs-Benutzereinrichtung kann hierbei zweckmäßig ein auf einem Datenträger gespeicherter Programmcode zur entsprechenden Programmierung einer an das OT-Netzwerk anschließbaren Datenverarbeitungseinrichtung eingesetzt werden.

Wie vorstehend aufgezeigt, kann es sich bei diesen Automatisierungsgeräten z.B. um Speicher programmierbare Steuerungen (SPS), IO-Module, Frequenzumrichter, Roboter, Netzwerkgeräte, Spannungsversorgungen und/oder weitere in der Automatisierungstechnik eingesetzte Komponenten handeln. Von Vorteil ist ferner, dass das System gemäß der Erfindung hierbei standardisierter Protokolle einsetzen kann, d.h. insbesondere Protokolle basierend auf OPC UA ("Open Platform Communications Unified Architecture"; ein Standard für den Datenaustausch als plattformunabhängige, serviceorientierte Architektur), SNMP ("Simple Network Management Protocol", ein Netzwerkprotokoll, das von der IETF entwickelt wurde, um Netzwerkelemente von einer zentralen Station aus überwachen und steuern zu können) oder DCP ("Dynamic Code Programming", eine Dynamisierung von objektorientierter Programmierung oder serviceorientierter Architektur), wobei auch eine Verteilung von Software an Geräten z.B. mit einem Eclipse Hawkbit Client (open source Lösung der Eclipse Foundation) möglich ist. Neben der Möglichkeit viele verschiedene Komponenten der Automatisierungsgeräte einer Automatisierungsanlage zu aktualisieren, kann in allen Ebenen auch die jeweils, insbesondere die jeweils Anwendungsbezogene, notwendige Sicherheit (im engl. Security) durchgängig sichergestellt werden. So kann in bevorzugten Ausführungsformen sichergestellt werden, dass sämtliche Kommunikation, insbesondere einschließlich hierzu erforderlicher Befehle und Kommandos, nur authentisiert und autorisiert durchgeführt wird. So kann insbesondere auch den Anforderungen des internationalen Standards IEC 62443, welcher sowohl technische als auch prozessorale Aspekte der Industriellen Cybersicherheit/Cybersecurity definiert, genüge getan werden. Bekanntermaßen sind die diesbezüglichen Anforderungen an die Cybersicherheit/Cybersecurity von Maschinen und Systemen sind in den letzten Jahren massiv gestiegen. Sind ältere Automatisierungsgeräte in der Automatisierungsanlage vorhanden, welche ggf. nicht die Security-Eigenschaften des Verwaltungs- und Aktualisierungssystems im Rahmen der Erfindung erfüllen können, können z.B. auch mit neuen Softwaremodulen versorgt werden und/oder gesondert gekennzeichnet werden, sodass z.B. mögliche Sicherheitsrisiken protokolliert hinterlegt und bei Bedarf abrufbar sind. Darüber hinaus kann die Geräteverwaltungs- und Aktualisierungs-Benutzereinrichtung auf den verschiedensten Ebenen betrieben werden, wie z.B. auf einem Edge-PC in der Automatisierungsanlage, auf einer zentralen Server-Instanz des Anwenders oder auch auf einem Automatisierungsgerät der Automatisierungsanlage selbst, d.h. insbesondere je nach Anwendungsfall und Größe des Verwaltungs- und Aktualisierungssystems.

## Patentansprüche

1. Verwaltungs- und Aktualisierungssystem (100) für an ein Operational Technology-Netzwerk angeschlossene Automatisierungsgeräte (200a - 200d) einer Automatisierungsanlage, umfassend
eine Geräteverwaltungs- und Aktualisierungs-Benutzereinrichtung (110), die an ein OT-Netzwerk angeschlossen ist, an welches ferner eine Mehrzahl von Automatisierungsgeräten (200a - 200d) einer Automatisierungsanlage angeschlossen ist, wobei die Geräteverwaltungs- und Aktualisierungs-Benutzereinrichtung (110) ferner programmtechnisch eingerichtet ist zum Bereitstellen:
- eines Schnittstellenauswahl- und -verbindungsdienstes, eingerichtet zum Auswählen und Einrichten einer Kommunikationsschnittstelle zum Herstellen einer Kommunikationsverbindung zu einem durch eine Netzwerkadministration zuvor voreingestellten Automatisierungsgerät der Mehrzahl von angeschlossenen Automatisierungsgeräten (200a - 200d) unter Nutzung eines Kommunikationsprotokolls in Abhängigkeit von dem voreingestellten Automatisierungsgerät,
- eines Auslesedienstes, eingerichtet zum Aktivieren eines Auslesens aus jedem voreingestellten Automatisierungsgerät, zu dem die Kommunikationsverbindung hergestellt ist, von in dem Automatisierungsgerät hinterlegter Geräte-Typ-Information, und zum Speichern der jeweils ausgelesenen Geräte-Typ-Information,
- eines Aktualisierungsplanungsdienstes, eingerichtet zum Planen von Aktualisierungsanforderungen für jedes voreingestellte Automatisierungsgerät der Mehrzahl von Automatisierungsgeräten (200a - 200d), zu dem ausgelesene Geräte-Typ-Information gespeichert ist, durch Erstellen eines Aktualisierungs-Plans für jedes zu aktualisierende Automatisierungsgerät mittels der jeweiligen ausgelesenen Geräte-Typ-Informationen, wobei mittels des Aktualisierungsplanungsdienstes eine Reihenfolge von Aktualisierungen und eine Version von Aktualisierungen mit der Geräteverwaltungs- und Aktualisierungs-Benutzereinrichtung (110) zentral, aber individuell für jedes einzelne Automatisierungsgerät vorgegeben ist,
- eines Aktualisierungsdateien-Abrufdienstes, eingerichtet zum Einrichten einer Kommunikationsverbindung zu wenigstens einer Speichereinrichtung und Abrufen von in der Speichereinrichtung hinterlegten Aktualisierungsdateien,
- eines Prüf und Zuweisungsdienstes, eingerichtet zum Prüfen jeder abgerufenen Aktualisierungsdatei auf deren Freigabe für ein Automatisierungsgerät der Mehrzahl von Automatisierungsgeräten (200a
- 200d) basierend auf der gespeicherten Geräte-Typ-Information dahingehend, ob eine mit dem Automatisierungsgerät kompatible Aktualisierung durchgeführt werden soll, und sofern die Prüfung einer der abgerufenen Aktualisierungsdateien zu einer Freigabe für ein Automatisierungsgerät führt, zum Zuweisen dieser Aktualisierungsdatei zu den zu diesem Automatisierungsgerät gespeicherten Geräte-Typ-Information,
- eines Aktualisierungsdienstes, eingerichtet zum Durchführen einer Aktualisierung auf dem Automatisierungsgerät und zum Übertragen dieser Aktualisierungsdatei einschließlich eines Aktualisierungsbefehls an jedes Aktualisierungsgerät, zu dessen gespeicherter Geräte-Typ-Information diese Aktualisierungsdatei zugewiesen worden ist, und zwar jeweils in funktionaler Abhängigkeit der für jedes Automatisierungsgerät durch den Aktualisierungsplanungsdienst geplanten Aktualisierungsanforderungen.

2. Verwaltungs- und Aktualisierungssystem (100) nach Anspruch 1, wobei die Geräteverwaltungs- und Aktualisierungs-Benutzereinrichtung (110) ferner programmtechnisch eingerichtet ist:
- zum Speichern der zugewiesenen Aktualisierungsdateien, und/oder
- zum Protokollieren des jeweiligen Aktualisierungsstatus in Bezug auf jedes Automatisierungsgerät, zu dem ausgelesene Geräte-Typ-Information gespeichert ist.

3. Verwaltungs- und Aktualisierungssystem (100) nach Anspruch 1 oder 2, wobei die Geräteverwaltungs- und Aktualisierungs-Benutzereinrichtung (110) ferner programmtechnisch eingerichtet ist:
- zum Speichern der ausgelesenen Geräte-Typ-Information derart, dass diese jeweils zu einem hierdurch spezifizierten, vom Automatisierungsgerät umfassten Asset, insbesondere betreffend Firmware, Anwendung oder Konfiguration des Automatisierungsgerätes, zum Planen der Aktualisierungsanforderungen jeweils für die durch die gespeicherten Geräte-Typ-Information spezifizierten Assets zugeordnet ist, zum Prüfen der abgerufenen Aktualisierungsdatei jeweils in Bezug auf die durch die gespeicherte Geräte-Typ-Information spezifizierten Assets und zum Zuweisen der freigegebenen Aktualisierungsdateien zu den jeweiligen Assets.

4. Verwaltungs- und Aktualisierungssystem (100) nach einem der vorstehenden Ansprüche, wobei die Aktualisierungsdateien zum Prüfen jeder abgerufenen Aktualisierungsdatei jeweils zusammen mit Beschreibungsdateien, die den hinterlegten Aktualisierungsdateien zugeordnet sind, abgerufen werden, wobei die Beschreibungsdateien insbesondere Informationen zum Dateityp, Informationen zu der Update-Datei, Herstellerinformationen, Versionsinformationen, Typinformationen, Abhängigkeiten zu vorhandenen Vorversionen und/oder Hardwareversionen, zu einer eindeutigen ID, einer Checksumme, einem Freigabestatus, und/oder Information zu weiteren begleitenden Dokumenten, insbesondere Lizenzinformationen und/oder Änderungsvermerke beinhalten.

5. Verwaltungs- und Aktualisierungssystem (100) nach einem der vorstehenden Ansprüche, wobei in einem Speicher der Geräteverwaltungs- und Aktualisierungs-Benutzereinrichtung (110) eine Anzahl von öffentlichen Schlüsseln hinterlegbar und der Prüf- und Zuweisungsdienst unter Verwendung der Anzahl von öffentlichen Schlüsseln eingerichtet ist, zum Prüfen von jeweils in den abgerufenen Aktualisierungsdateien enthaltenen, mit einem privaten Schlüssel erstellten Signaturen.

6. Verwaltungs- und Aktualisierungssystem (100) nach einem der vorstehenden Ansprüche, wobei die Geräteverwaltungs- und Aktualisierungs-Benutzereinrichtung (110) auf einem Edge-PC, auf einem Automatisierungsgerät der Mehrzahl von Automatisierungsgeräten (200a - 200d) selbst oder auf einer zentralen Server-Instanz des Anwenders programmtechnisch eingerichtet ist.

7. Verwaltungs- und Aktualisierungssystem (100) nach einem der vorstehenden Ansprüche, wobei die Geräteverwaltungs- und Aktualisierungs-Benutzereinrichtung (110) ferner eingerichtet ist, in Abhängigkeit der Automatisierungsgeräte (200a - 200d) und/oder zum Betreiben des Aktualisierungsdateien-Abrufdienstes unterschiedliche Protokolle aus einer Mehrzahl von Datenaustauschprotokollen, insbesondere umfassend standardisierte Protokolle, wie z.B. OPC UA, SNMP oder DCP, und/oder Open-Source-Protokolle zu nutzen.

8. Verwaltungs- und Aktualisierungssystem (100) nach einem der vorstehenden Ansprüche, wobei ferner eine Verwaltungsplattform umfasst ist, die einer Vielzahl von Geräteverwaltungs- und Aktualisierungs-Benutzereinrichtungen (110) nach einem der vorstehenden Ansprüche hierarchisch überlagert und eingerichtet ist, zum Bereitstellen von in einer Speichereinrichtung zum Abrufen durch die Vielzahl von Geräteverwaltungs- und Aktualisierungs-Benutzereinrichtungen (110) hinterlegten Aktualisierungsdateien.

9. Verwaltungs- und Aktualisierungssystem (100) nach Anspruch 8, wobei ferner die Verwaltungsplattform in einem IT-Netzwerk angeordnet ist, insbesondere als Cloud-basierte Plattform eingerichtet ist.

10. Datenträger mit einem darauf gespeicherten Programmcode, wobei der Programmcode derart ausgebildet ist, dass eine an ein Operational Technology-Netzwerk angeschlossene Datenverarbeitungseinrichtung, wenn sie mit dem Programmcode programmiert ist, eine gemäß einem der vorstehenden Ansprüche eingerichtete Geräteverwaltungs- und Aktualisierungs-Benutzereinrichtung (110) bereitstellt.

## Claims

1. Management and updating system (100) for automation devices (200a - 200d) of an automation plant connected to an Operational Technology network, comprising
a device management and updating user unit (110) connected to an OT network, to which a plurality of automation devices (200a-200d) of an automation plant, wherein the device management and updating user unit (110) is further set up by programming to provide:
- an interface selection and connection service set up to select and set up a communication interface for establishing a communication link to an automation device, preset beforehand by a network administrator, from among the plurality of connected automation devices (200a - 200d) using a communication protocol dependent on the preset automation device,
- a read-out service set up for activating a reading out, from each preset automation device with which the communication link has been established, of device type information stored in the automation device, and to store the respective device type information read out,
- an update planning service set up to plan update requests for each preset automation device from the plurality of automation devices (200a - 200d) for which read device-type information has been stored, by creating an update plan for each automation device to be updated using the respective read device-type information, whereby the update planning service determines a sequence of updates and a version of updates is specified centrally by the device management and updating user unit (110), but individually for each individual automation device,
- an update file retrieval service, configured to establish a communication link to at least one storage device and to retrieve update files stored in the storage device,
- a check and allocation service set up to check each retrieved update file as to whether for its release with respect to an automation device of the plurality of automation devices (200a - 200d), based on the stored device-type information, as to whether an update compatible with that automation device should be carried out; and, if the check of any of the retrieved update files results in a release for an automation device, to assign that update file to the device-type information stored for that automation device,
- an update service set up for to carry out an update on the automation device and to transmit this update file, including an update command, to each automation device to whose stored device type information this update file has been assigned, in each case in functional dependence on the update requirements planned for each automation device by the update planning service.

2. Management and updating system (100) according to claim 1, wherein the device management and updating user unit (110) is further set up by programming :
- to store the assigned update files, and/or to log the respective update status with regard to each automation device for which read-out device type information is stored.

3. Management and updating system (100) according to claim 1 or 2,
wherein the device management and updating user unit (110) is further set up by programming :
- to store the read device type information in such a way that it is associated with an asset specified thereby and comprised by the automation device, in particular relating to the firmware, application or configuration of the automation device; to plan the update requirements for the assets specified by the stored device type information; to check the retrieved update file in relation to the assets specified by the stored device type information; and to assign the approved update files to the respective assets.

4. Management and updating system (100) according to one of the preceding claims, wherein the update files are retrieved, for the purpose of checking each retrieved update file, together with description files associated with the stored update files, wherein the description files in particular contain information on the file type, information on the update file, manufacturer information, version information, type information, dependencies on existing previous versions and/or hardware versions, a unique ID, a checksum, a release status, and/or information on further accompanying documents, in particular license information and/or change notes.

5. Management and updating system (100) according to one of the preceding claims, wherein a number of public keys can be stored in a memory of the device management and updating user unit, and the verification and the allocation service is set up using the number of public keys, for verifying signatures in the retrieved update files, each of which was created using a private key.

6. Management and updating system (100) according to one of the preceding claims, wherein the device management and updating user unit (110) is set up by programming on an edge PC, on one of the plurality of automation devices (200a-200d) itself, or on a central server instance of the user.

7. Management and updating system (100) according to one of the preceding claims, wherein the device management and updating user unit (110) is further set up to use different protocols from a plurality of data exchange protocols, in particular comprising standardized protocols such as OPC UA, SNMP or DCP, and/or open-source protocols, depending on the automation devices (200a-200d) and/or for operating the update file retrieval service.

8. Management and updating system (100) according to one of the preceding claims, further comprising a management platform which is hierarchically superimposed upon a plurality of device management and updating user units (110) according to one of the preceding claims and is configured to provide update files stored in a storage device for retrieval by the plurality of device management and updating user units (110).

9. Management and updating system (100) according to claim 8, wherein the management platform is further located within an IT network, in particular is set up as a cloud-based platform.

10. Data carrier having program code stored thereon, wherein the program code is configured such that a data processing device, when connected to an operational technology network, when programmed with the program code, provides a device management and updating user unit (110) set up in accordance with one of the preceding claims.

## Revendications

1. Système de gestion et de mise à jour (100) pour des appareils d'automatisation (200a - 200d) connectés à un réseau de technologie opérationnelle d'une installation d'automatisation, comprenant
une fonction utilisateur de gestion et de mise à jour d'appareil (110) connectée à un réseau OT, auquel sont également connectés une pluralité d'appareils d'automatisation (200a - 200d) d'une installation d'automatisation, la fonction utilisateur de gestion et de mise à jour d'appareil (110) étant en outre configurée par programmation pour fournir :
- un service de sélection et de connexion d'interface, configuré pour sélectionner et configurer une interface de communication afin d'établir une connexion de communication avec un appareil d'automatisation préalablement préréglé par un administrateur réseau de la pluralité des appareils d'automatisation (200a - 200d) connectés en faisant appel à un protocole de communication en fonction de l'appareil d'automatisation préréglé,
- un service de lecture, configuré pour activer une lecture, à partir de chaque appareil d'automatisation préréglé avec lequel la connexion de communication est établie, d'informations sur le type d'appareil stockées dans l'appareil d'automatisation, et pour mémoriser les informations sur le type d'appareil lues respectives,
- un service de planification des mises à jour, configuré pour planifier les demandes de mise à jour pour chaque appareil d'automatisation préréglé parmi la pluralité d'appareils d'automatisation (200a - 200d) pour lesquels des informations sur le type d'appareil lues sont mémorisées, par élaboration d'un plan de mise à jour pour chaque appareil d'automatisation à mettre à jour à l'aide des informations sur le type d'appareil lues respectives, dans lequel, au moyen du service de planification des mises à jour, une séquence de mises à jour et une version de mises à jour sont spécifiées de manière centralisée mais individuelle pour chaque appareil d'automatisation avec la fonction utilisateur de gestion et de mise à jour d'appareil (110),
- un service de récupération de fichiers de mise à jour, configuré pour établir une connexion de communication avec au moins une fonction de mémoire et pour récupérer les fichiers de mise à jour stockés dans la fonction de mémoire,
- un service de vérification et d'attribution, configuré pour vérifier chaque fichier de mise à jour récupéré en vue de le partager avec un appareil d'automatisation de la pluralité des appareils d'automatisation (200a - 200d) en fonction des informations de type d'appareil mémorisées afin de déterminer si une mise à jour compatible avec l'appareil d'automatisation doit être effectuée, et si la vérification de l'un des fichiers de mise à jour récupérés aboutit à un partage avec un appareil d'automatisation, pour attribuer ce fichier de mise à jour aux informations de type d'appareil mémorisées pour cet appareil d'automatisation,
- un service de mise à jour, configuré pour effectuer une mise à jour sur l'appareil d'automatisation et pour transférer ce fichier de mise à jour, y compris une instruction de mise à jour, à chaque appareil de mise à jour auquel les informations de type d'appareil mémorisées de ce fichier de mise à jour ont été attribuées, respectivement en fonction des demandes de mise à jour planifiées pour chaque appareil d'automatisation par le service de planification des mises à jour.

2. Système de gestion et de mise à jour (100) selon la revendication 1, dans lequel la fonction utilisateur de gestion et de mise à jour d'appareil (110) est en outre configurée par programmation :
- pour mémoriser les fichiers de mise à jour attribués, et/ou
- pour consigner l'état de mise à jour respectif pour chaque appareil d'automatisation pour lequel des informations sur le type d'appareil lues sont mémorisées.

3. Système de gestion et de mise à jour (100) selon la revendication 1 ou 2, dans lequel la fonction utilisateur de gestion et de mise à jour d'appareil (110) est en outre configurée par programmation :
- pour mémoriser les informations de type d'appareil lues de manière à ce qu'elles soient attribuées à chaque actif spécifié par ces informations, inclus dans l'appareil d'automatisation, notamment en ce qui concerne le micrologiciel, l'application ou la configuration de l'appareil d'automatisation, pour planifier les demandes de mise à jour respectivement pour les actifs spécifiés par les informations de type d'appareil mémorisées, pour vérifier le fichier de mise à jour récupéré respectivement par rapport aux actifs spécifiés par les informations de type d'appareil mémorisées et pour attribuer les fichiers de mise à jour partagés aux actifs respectifs.

4. Système de gestion et de mise à jour (100) selon l'une des revendications précédentes, dans lequel les fichiers de mise à jour permettant de vérifier chaque fichier de mise à jour récupéré sont récupérés conjointement avec des fichiers de description associés aux fichiers de mise à jour stockés, les fichiers de description comprenant notamment des informations sur le type de fichier, des informations sur le fichier de mise à jour, des informations sur le fabricant, des informations sur la version, des informations sur le type, les dépendances sur les versions matérielles et/ou version précédentes existantes, sur un identifiant unique, une somme de contrôle, un statut de publication et/ou des informations sur d'autres documents d'accompagnement, notamment des informations de licence et/ou des notes de modification.

5. Système de gestion et de mise à jour (100) selon l'une des revendications précédentes, dans lequel un certain nombre de clés publiques peuvent être stockées dans une mémoire de la fonction utilisateur de gestion et de mise à jour d'appareil (110) et le service de vérification et d'attribution est configuré à l'aide du certain nombre de clés publiques pour vérifier les signatures créées avec une clé privée contenue respectivement dans les fichiers de mise à jour récupérés.

6. Système de gestion et de mise à jour (100) selon l'une des revendications précédentes, dans lequel la fonction utilisateur de gestion et de mise à jour d'appareil (110) est configurée par programmation technique sur un PC périphérique, sur un appareil d'automatisation de la pluralité d'appareils d'automatisation (200a - 200d) lui-même ou sur une instance de serveur central de l'utilisateur.

7. Système de gestion et de mise à jour (100) selon l'une des revendications précédentes, dans lequel la fonction utilisateur de gestion et de mise à jour d'appareil (110) est en outre configurée pour utiliser différents protocoles parmi une pluralité de protocoles d'échange de données, notamment comprenant des protocoles normalisés tels que OPC UA, SNMP ou DCP, et/ou des protocoles open-source, en fonction des appareils d'automatisation (200a - 200d) et/ou pour faire fonctionner le service de récupération des fichiers de mise à jour.

8. Système de gestion et de mise à jour (100) selon l'une des revendications précédentes, comprenant en outre une plateforme de gestion qui est superposée hiérarchiquement par rapport à une pluralité de fonctions utilisateurs de mise à jour et de gestion d'appareil (110) selon l'une quelconque des revendications précédentes et est configurée pour fournir des fichiers de mise à jour stockés dans une fonction de mémoire pour récupération par la pluralité de fonctions utilisateurs de gestion et de mise à jour d'appareil (110).

9. Système de gestion et de mise à jour (100) selon la revendication 8, dans lequel la plateforme de gestion est en outre agencée dans un réseau informatique, notamment configurée comme une plateforme en nuage.

10. Support de données sur lequel est mémorisé un code de programme, le code de programme étant réalisé de telle sorte qu'une fonction de traitement de données connectée à un réseau de technologie opérationnelle, lorsqu'il est programmé avec le code de programme, fournisse une fonction utilisateur de gestion et de mise à jour d'appareil (110) configurée selon l'une des revendications précédentes.
